# NEUE EUROPÄISCHE PATENTSCHRIFT

(11) **EP 2 743 103 B2**
(45) Veröffentlichungstag und Bekanntmachung des Hinweises auf die Entscheidung über den Einspruch: **04.01.2023**
(45) Hinweis auf die Patenterteilung: 03.02.2016
(21) Anmeldenummer: 13005906.6
(22) Anmeldetag: 22.11.2011
(51) Int. Cl.: B60G 17/052, F16K 31/06

(54) **Druckluftversorgungsanlage und pneumatisches System**
Druckluftversorgungsanlage und pneumatisches System
Système d'alimentation en air comprimé et un système pneumatique

(30) Priorität: 16.12.2010 DE 102010054712
(43) Veröffentlichungstag der Anmeldung: 18.06.2014
(62) Teilanmeldung aus: 11787798.5
(73) Patentinhaber: ZF CV Systems Europe BV, 1170 Brüssel (BE)
(72) Erfinder: Dieter Frank, 30171 Hannover (DE); Frank Meißner, 30453 Hannover (DE); Uwe Stabenow, 30880 Laatzen (DE)
(74) Vertreter: Eisenführ Speiser

(56) Entgegenhaltungen:
- EP-A1- 1 386 811
- EP-A1- 1 508 488
- EP-B1- 1 165 333
- EP-B1- 1 233 183
- DE-A1- 3 525 083
- DE-A1- 3 542 974
- DE-A1- 10 055 108
- DE-A1- 19 515 895
- DE-A1- 19 835 638
- DE-A1-102007 050 151
- DE-B4- 19 911 933
- DE-B4-102007 051 150
- DE-C1- 19 700 243
- DE-C1- 19 724 747
- DE-C1- 19 821 420
- DE-C2- 3 216 329
- DE-C2- 3 919 438
- US-A1- 2006 017 250

## Beschreibung

Die Erfindung betrifft eine Druckluftversorgungsanlage gemäß dem Oberbegriff des Anspruchs 1. Weiter betrifft die Erfindung ein pneumatisches System gemäß dem Oberbegriff des Anspruchs 14 mit einer solchen Druckluftversorgungsanlage und ein Verfahren gemäß dem Oberbegriff des Anspruchs 15 zum Betreiben einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Solche Systeme werden in Geländefahrzeugen und Sport Utility Vehicles (SUV) eingesetzt. Insbesondere bei SUVs ist es bei sehr leistungsfähigen Motoren wünschenswert das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Eine Druckluftversorgungsanlage zur Verwendung in einem pneumatischen System mit einer Pneumatikanlage, beispielsweise einer zuvor beschriebenen Luftfederanlage, wird mit Druckluft aus einer Druckluftzuführung, beispielsweise im Rahmen eines Druckniveaus von 5 bis 20 bar, betrieben. Die Druckluft wird mit einem Luftverdichter (Kompressor) der Druckluftzuführung zur Verfügung gestellt. Die Druckluftzuführung ist zur Versorgung der Pneumatikanlage mit einem Druckluftanschluss pneumatisch verbunden und andererseits mit einem Entlüftungsanschluss pneumatisch verbunden. Über eine Entlüftungsventilanordnung kann durch Ablassen von Luft die Druckluftversorgungsanlage zum Entlüftungsanschluss hin entlüftet werden.

Zur Sicherstellung eines langfristigen Betriebs der Druckluftversorgungsanlage weist diese einen Lufttrockner auf, mit dem die Druckluft zu trocknen ist. Dadurch wird die Ansammlung von Feuchtigkeit im Pneumatiksystem vermieden, was bei vergleichsweise niedrigen Temperaturen zu ventilschädigender Kristallbildung führen kann und ansonsten zu ungewünschten Defekten in der Druckluftversorgungsanlage und in der Pneumatikanlage führen kann. Ein Lufttrockner weist ein Trockenmittel auf, üblicherweise eine Granulatschüttung, welche von der Druckluft durchströmbar ist, so dass die Granulatschüttung - bei vergleichsweise hohem Druck - in der Druckluft enthaltene Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus - bei vergleichsweise niedrigem Druck - mit der getrockneten Druckluft aus dem Luftfederungssystem im Gegenstrom oder Gleichstrom relativ zur Befüllrichtung durchströmt werden. Dazu kann die Entlüfttungsventilanordnung geöffnet werden. Für eine solche - auch als Druckwechseladsorption bezeichnete - Anwendung hat es sich als wünschenswert erwiesen, eine Druckluftversorgungsanlage flexibel und gleichzeitig verlässlich auszulegen, insbesondere eine vergleichsweise schnelle Entlüftung mit einem dennoch für eine Regeneration des Lufttrockners ausreichendem Druckwechsel, zu ermöglichen.

Aus DE 35 429 74 A1 der Anmelderin ist eine eingangs genannte Druckluftversorgungsanlage für eine Niveauregeleinrichtung für Fahrzeuge mit Luftfedern bekannt, mit der in Abhängigkeit von der Fahrzeugbelastung ein vorgegebener Abstand der Fahrzeugzelle von der Fahrzeugachse durch Auffüllen oder Entleeren der Luftfedern aufrechterhalten werden kann. Die Einrichtung enthält ein stromlos geschlossenes Magnetentlüftungsventil und ein mit dem Druck in den Luftfedern steuerbares Sicherheitsventil. Eine solche Druckluftversorgungsanlage ist noch verbesserbar.

DE 199 11 933 B4 offenbart einen Drucklufterzeuger mit einem Lufttrockner mit einer ersten Druckluftversorgungsleitung, wobei die Druckluft durch ein Trockenmittel geleitet wird, und mit einer zweiten Druckluftversorgungsleitung ohne dass die Druckluft durch das Trockenmittel geleitet wird.

Eine eingangs genannte Druckluftversorgungsanlage ist auch in EP 1 165 333 B2 im Rahmen eines eingangs genannten pneumatischen Systems mit einer Luftfederanlage offenbart. Diese weist neben einer separat absperrbaren Hauptentlüftungsleitung eine Hochdruckentlüftungsleitung auf, die mit einem zusätzlichen Hochdruckentlüftungsventil neben dem mit einem Steuerventifpneumatisch angesteuerten Hauptentlüftungsventil in der Hauptentlüftungsleitung auf und die zur Hauptentlüftungsleitung parallel geschaltet ist. Der freie Durchströmquerschnitt des separaten Hochdruckentlüftungsventils ist geringer als derjenige des Hauptentlüftungsventils. Eine solche Druckluftversorgungsanlage ist noch verbesserbar. Es hat sich gezeigt, dass bei Entlüftung einer solchen Druckluftversorgungsanlage über die Hochdruckentlüftungsleitung die Entlüftung von trockener Luft erfolgt, welche nicht für die Regeneration des Trockenmittels verwendet wird. Dies kommt einer unnötigen Verschwendung von trockener Luft gleich, insbesondere für den Fall, dass eine für obige Anwendungen geeignete, flexible, schnelle und dennoch verlässliche Betätigung der Druckluftversorgungsanlage mit entsprechend hoher Betätigungsrate erforderlich sein sollte.

Aus EP 1 233 183 B1 ist eine Druckluftregeleinrichtung mit einem Lufttrockner bekannt, in dessen Gehäuse ein topfförmiger Trockenbehälter enthalten ist, dessen Inneres über das Gehäuse einerseits mit einer Druckmittelquelle und andererseits mit einem Anschlusselement in Form eines Druckspeichers und/oder einer Luftfeder über ein zu diesem öffnendes Ventil verbindbar ist, wobei das Gehäuse einen Lufteinlass und einen Luftauslass jeweils für die Druckluft aufweist, die zum Füllen des mindestens einen Anschlusselements in einer Strömungsrichtung vom Lufteinlass durch den Trockenbehälter hindurch zum Luftauslass geführt wird und zum Entleeren in entgegengesetzter Strömungsrichtung vom Luftauslass her durch den Trockenbehälter und das Gehäuse und aus letzterem abgeführt wird. Ein steuerbares Wegeventil ist in das Gehäuse des Lufttrockners integriert und eingebaut, das beim Entleeren zum Einlass der Luft in das Gehäuseinnere und den Trockenbehälter dient. Ein den Abführkanal steuerndes Wegeventil wird von mindestens einem weiteren steuerbaren Wegeventil mit dem Druck beim Entleeren angesteuert, wobei diese Magnetventilanordnung im Wesentlichen außerhalb des Gehäuses des Lufttrockners angeordnet ist.

Aus DE 32 16 329 C2 ist ein Lufttrockner einer von einem Kompressor aufladbaren einen Druckluftvorratsbehälter aufweisenden Druckluftanlage mit einem Auslassventil bekannt, wobei in einer Rückströmleitung zwischen dem Druckluftvorratsbehälter einerseits und dem ein Trockenmittel enthaltenen Behälter sowie dem Auslassventil andererseits ein Druckrückhalteventil vorgesehen ist. Das Auslassventil und ein dieses regelnder Druckregler sind mit einer hohlen Stange durch den das Trockenmittel enthaltenen Behälter des Lufttrockners hindurchführend verbunden. Solche und andere vorbekannte Lösungen für einen Lufttrockner haben sich als vergleichsweise sperrig bzw. bauraumintensiv erwiesen. Wünschenswert wäre es, eine Druckluftversorgungsanlage mit einer Entlüftungsventilanordnung und einem Lufttrockner möglichst Platz sparend einzurichten.

Alle vorgenannten Lösungen sehen bei der Entlüftungsventilanordnung in Form einer steuerbaren Magnetventilanordnung vor, dass bei einem nicht angesteuerten Zustand des Magnetteils der Pneumatikteil der Magnetventilanordnung geschlossen ist; d.h. die Lösungen sehen eine stromlos geschlossene Magnetventilanordnung vor. Insbesondere hinsichtlich der in DE 35 42 974 A1 genannten Lösung hat sich gezeigt, dass eine stromlos geschlossene Magnetentlüftungsventilanordnung nachteilig sein kann, da häufig ein zusätzliches Druckbegrenzungs- oder Sicherheitsventil vorgesehen werden muss, um eine zuverlässige Funktion zu gewährleisten. Da in stromlos geschlossenem Zustand ein Relaisventil der Magnetventilanordnung geschlossen ist, kann dies in Einzelfällen dazu führen, dass ein Ventilkörper am Ventilsitz haftet und gegebenenfalls die Schaltfunktion des Relaisventils der Magnetventilanordnung nicht zuverlässig gewährleistet ist.

Aus der DE3919438C2 ist eine druckluftbetätigte Einrichtung mit einem zwischen einer Druckmittelquelle und Verbrauchern befindlichen Lufttrockner bekannt, wobei das direkt geschaltete 2/2-Magnet-Entlüftungsventil in einer Variante als stromlos offenes Ventil dargestellt ist.

Die DE19724747C1 betrifft eine Niveauregeleinrichtung für Fahrzeuge mit Luftfedern, durch die ein Fahrzeugaufbau gegenüber mindestens einer Fahrzeugachse abgefedert ist. Um die Vereisung des steuerbaren Wegeventils, über das feuchte Luft geführt wird, zu verhindern, ist dieses Wegeventil als pneumatisch steuerbares Wegeventil ausgebildet und wird zur Steuerung bzw. Schaltung über die Steuerleitung mit dem von dem Kompressor erzeugten Luftdruck beaufschlagt. Die Steuerleitung kann über ein drittes Wegeventil mit der Atmosphäre verbunden werden, so dass bei nicht laufendem Kompressor das zweite Wegeventil von dem einen Schaltzustand, der den Kompressor mit dem Lufttrockner verbindet, in den anderen Schaltzustand, der den Lufttrockner mit der Atmosphäre verbindet, übergehen kann.

Die DE10055108A1 betrifft eine Luftfederung für ein Fahrzeug, mit mindestens einer Luftfeder pro Rad an mindestens einer Fahrzeugachse, einer Pumpe, mindestens einem Speicherbehälter und einer diese Aggregate verbindenden Schaltung, wobei die Druckseite der Pumpe mit dem Speicher oder den Luftfedern verbunden ist. Dazu wird die Saugseite der Pumpe unter Ausbildung eines geschlossenen Druckluftsystems über mindestens ein Ventil mit dem Speicherbehälter oder den Luftfedern verbunden und es werden zumindest die zwischen der Saugseite und der Druckseite der Pumpe liegenden, luftführenden Pumpeninnenräume druckdicht ausgeführt.

Die DE102007050151A1 betrifft ein druckentlastetes Schaltventil mit einer Schalteinheit, welche einen der einen ersten Druckraum von einem zweiten Druckraum unterteilenden Ventilkolben aufweist, wobei der zweite Druckraum durch ein Dichtelement abgedichtet ist, welches zwischen dem Ventilkolben und einem zugeordneten Gehäusebereich angeordnet ist, wobei das Dichtelement mit einer Dichtseite an einer Stirnseite des Ventilkolbens angeordnet ist.

Aufgabe der Erfindung ist es, eine Vorrichtung und ein Verfahren anzugeben, welche im Hinblick auf den Stand der Technik verbessert ist. Insbesondere soll eine alternative Lösung zum Stand der Technik angegeben werden, welche die mit einem stromlos geschlossenen Magnetventil verbundenen Nachteile beseitigt. Insbesondere soll eine Entlüftungs- und/oder Trockenleistung der Druckluftversorgungsanlage verbessert sein.

Die Aufgabe hinsichtlich der Vorrichtung wird gelöst durch eine Druckluftversorgungsanlage der eingangs genannten Art, bei der erfindungsgemäß die Merkmale des kennzeichnenden Teils des Anspruchs 1 vorgesehen ist. Die Aufgabe hinsichtlich des Verfahrens wird gelöst durch ein erfindungsgemäßes Verfahren des Anspruchs 15.

Die Erfindung geht von der Überlegung aus, dass bei einem stromlos geschlossenen Magnetventil im Rahmen einer als Magnetventilanordnung ausgebildeten Entlüftungsventilanordnung - insbesondere im Falle eines ungewollt am Ventilsitz haftenden Ankers oder dgl. Ventilkörpers - die Gefahr besteht, dass bei anhaltender Luftförderung des Luftverdichters ungewollt ein Überdruck in der Druckluftversorgungsanlage entsteht. Dieser kann im ungünstigsten Fall auch auf eine Pneumatikanlage eines pneumatischen Systems übergreifen und zu Schäden in der Pneumatikanlage führen. Dies wäre insbesondere im Falle einer Luftfederanlage höchst unvorteilhaft. Vorteilhaft ist ein Druckbegrenzer mit der Magnetventilanordnung, z. B. an einem Magnetventil zur direkten Schaltung eines Gesamtdruckluftvolumens oder an einem Relaisventil, realisiert. Im Rahmen der Erfindung ist ein Strom einstellbarer Druckbegrenzer bei der stromlos offenen Magnetventilanordnung vorgesehen mit wesentlichen Vorteilen gegenüber dem bisherigen Einsatz von stromlos geschlossenen Magnetventilanordnungen. Die Erfindung hat erkannt, dass der Schaltaufwand zum Betreiben eines stromlos offenen Magnetventils vergleichsweise gering ist. Das Konzept der Erfindung schlägt ausgehend von diesen Überlegungen vor, eine Magnetventilanordnung zu verwenden, bei der in nicht angesteuertem Zustand des Magnetteils, insbesondere bei stromlosem Magnetteil, der Pneumatikteil geöffnet ist. Eine solche Anordnung wird im Folgenden auch als stromlos offene Magnetventilanordnung bezeichnet. Insbesondere ist vorgesehen, dass der unmittelbar über den Magnetteil der Magnetventilanordnung aktuierbare Pneumatikteil der Magnetventilanordnung in einer Entlüftungsleitung oder anderen Zweigleitung der Druckluftversorgungsleitung zwischen einem druckseitigen Ventilanschluss (X) und einem entlüftungsseitigen und/oder steuerseitigen Ventilanschluss (Y, Z) geöffnet ist.

Das Konzept der Erfindung umfasst - in einer ersten Variante - in vorteilhafter Weise eine Magnetventilanordnung zur direkten Schaltung eines Druckluftvolumens. Vorzugsweise weist eine solche Magnetventilanordnung nur ein einziges oder mehrere Entlüftungsventile auf. Im Falle eines einzigen Entlüftungsventils kann ein Druckluftvolumen durch das einzige Entlüftungsventil direkt geschalten werden. Im Falle mehrerer Entlüftungsventile können diese beispielsweise als ein primäres Entlüftungsventil und sekundäres Entlüftungsventil realisiert sein. Das primäre Entlüftungsventil und das sekundäre Entlüftungsventil können je nach Bedarf gleichzeitig nacheinander oder einzeln zur Entlüftung eines Druckluftvolumens geschaltet werden. Eine solche direkt gesteuerte Entlüftungs-Magnetventilanordnung ist insbesondere frei von einem Steuerventil. Sie kann ein einziges oder mehrere ein Druckluftvolumen schaltende Magnetventile aufweisen, von denen wenigstens eines oder eine Teilanzahl oder alle gemäß dem Konzept der Erfindung stromlos offen sind. Es eignen sich insbesondere stromlos offene Einzelanker- oder Doppelanker-Magnetventile.

Das Konzept der Erfindung ist nicht beschränkt auf eine direkt gesteuerte Magnetventilanordnung.

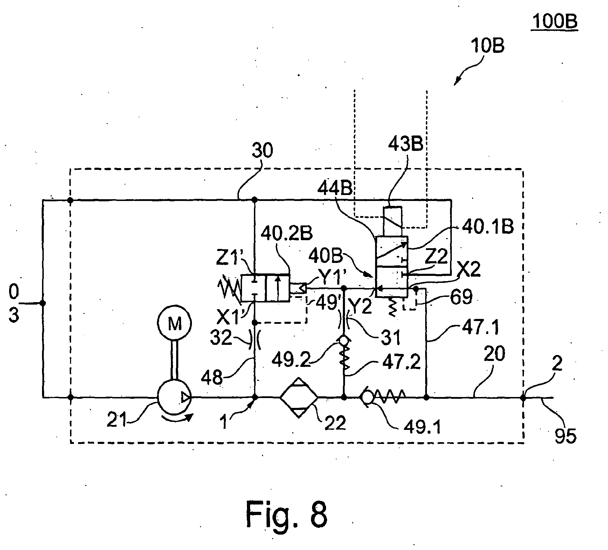

Das Konzept der Erfindung umfasst mit Vorteil versehen - in einer zweiten Variante - eine indirekt gesteuerte normal entlüftende Anordnung zur indirekten Schaltung eines Druckluftvolumens, bei der ein einem Gesamtdruck ausgesetztes Steuerventil zur Steuerung eines Relaisventils vorgesehen ist. Bei einer solchen normal entlüftenden Anordnung ist in einem nicht angesteuerten Zustand des Magnetteils des Steuerventils der Pneumatikteil des Steuerventils geöffnet, so dass das Relaisventil in einem vorgesteuerten Zustand ist. Im Falle einer Druckbeaufschlagung öffnet das Relaisventil sofort; das Relaisventil erweist sich im Ergebnis als praktisch stromlos offen. In Fig. 8 ist ein Ausführungsbeispiel einer normal entlüftenden, indirekt gesteuerten Entlüftungs-Magnetventilanordnung für eine Entlüftungsventilanordnung dargestellt. Ein Lufttrockner ist dabei durch ein separates Rückschlagventil zur Pneumatikanlage hin abgesperrt.

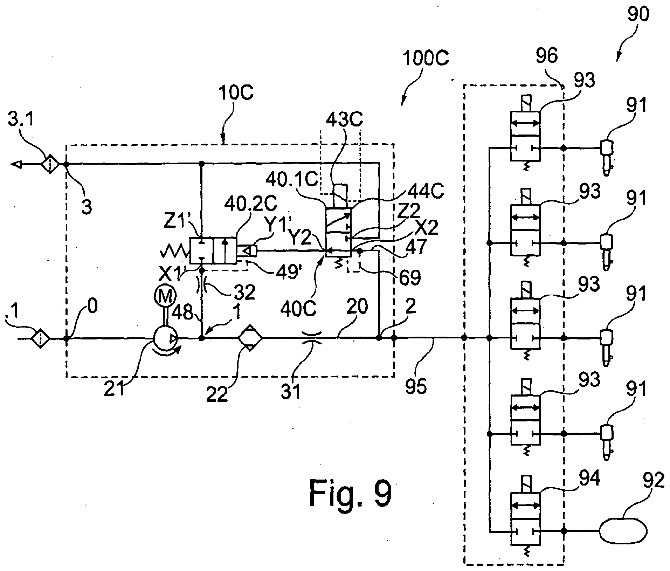

Das Konzept umfasst - in einer dritten Variante - eine Magnetventilanordnung in Form einer indirekt gesteuerten Magnetventilanordnung. Dies kann eine schnell entlüftende Anordnung zur indirekten Schaltung eines Druckluftvolumens sein, bei der ein einem Teildruck ausgesetztes Steuerventil zur Steuerung eines Relaisventils vorgesehen ist. Bei nicht angesteuertem Zustand des Magnetteils des Steuerventils ist der Pneumatikteil des Steuerventils bei einer indirekt gesteuerten schnelllüftenden Anordnung geöffnet, so dass das Relaisventil in einem vorgesteuerten Zustand ist. Im Falle einer Druckbeaufschlagung öffnet das Relaisventil sofort; das Relaisventil erweist sich im Ergebnis praktisch als stromlos offen. In Fig. 9 ist ein Ausführungsbeispiel einer schnell entlüftenden indirekt gesteuerten Entlüftungs-Magnetventilanordnung für eine Entlüftungsventilanordnung dargestellt. Ein Lufttrockner ist dabei über eine Regenerationsdrossel zur Pneumatikanlage offen.

Eine indirekt gesteuerte Ventilanordnung - schnell oder normal entlüftend - kann ähnlich einer servogesteuerten Ventilanordnung oder zwangsgesteuerten Ventilanordnung verstanden werden. Eine direkt gesteuerte Ventilanordnung weist dagegen ein oder mehrere direkt gesteuerte Ventile auf, die einfacher realisierbar sind.

Grundsätzlich vermeidet das Konzept der Erfindung einer stromlos geöffneten Magnetventilanordnung den Nachteil eines so genannten Ventilklebers, d. h. den Nachteil eines am Ventilsitz haftenden Ventilkörpers, da der Ventilkörper bei einem stromlos offenen Magnetventil nicht die längste Zeit am Ventilsitz angeordnet ist. Außerdem ist, bei ständiger Durchflutung eines stromlos offenen Magnetventils, eine Selbstreinigung des Ventilsitzes gegeben. Dies trifft insbesondere auf eine direkt gesteuerte Magnetventilanordnung zu. Die Druckluftversorgungsanlage ist vorteilhaft gegen den externen Eintrag von Verschmutzungen geschützt.

Es hat sich gezeigt, dass jedenfalls separate Sicherheitsventile beim Konzept der Erfindung weitgehend überflüssig sein können. Selbst im Falle einer ungewollt anhaltenden Förderung des Luftverdichters (z. B. aufgrund eines Relaisklebers am Motor des Verdichters) geht diese Förderung aufgrund der stromlos offenen Magnetventilanordnung der Entlüftungsventilanordnung ins Freie. Somit kann ein Zustand ungewollter Luftförderung nicht zu einer Überdruckbelastung der Druckluftversorgungsanlage oder gar der Pneumatikanlage führen. Selbst wenn ein Fehlerfall auftreten sollte fördert vorteilhaft ein dann nicht mehr steuerbarer Luftverdichter nicht gegen einen voreingestellten Maximaldruck. Vielmehr fördert dieser dann nur - bei indirekt gesteuerten Anordnungen nahezu und bei direkt gesteuerten Anordnungen gänzlich - gegen Atmosphärendruck. Zudem ergibt sich bei allen zuvor genannten Varianten der Vorteil, dass bei einem Anlaufen des Luftverdichters ein druckloser Anlauf aufgrund der stromlos offenen Magnetventilanordnung möglich ist.

Bei allen drei vorgenannten Varianten einer Magnetventilanordnung - d. h. sowohl bei einer direkt gesteuerten Entlüftungsmagnetventilanordnung als auch bei einer schnell entlüftenden oder normal entlüftenden indirekt vorgesteuerten Magnetventilanordnung - ergibt sich der Vorteil, dass diese bei einem jeden Umfüllen von Druckluft in der Pneumatikanlage, d.h. zum Beispiel von einem Speicher zu einem Balgventil, angesteuert geschlossen werden können, d.h. der Magnetteil wird angesteuert und der Pneumatikteil wird geschlossen. Somit entsteht praktisch kein Druckverlust über einen Lufttrockner. Insbesondere kann sich dadurch, wenn zweckmäßig, ein Abtrennen der Pneumatikanlage von der Druckluftversorgungsanlage erübrigen.

Zu einem Pneumatikteil einer Magnetventilanordnung gehören insbesondere die pneumatisch wirkenden Teile, wie das Ventil als solches mit Ventilkörper, Ventilsitz, Ventildichtung, Ventilgehäuse oder dergleichen. Zu einem Magnetteil einer Magnetventilanordnung gehören insbesondere die elektrisch und/oder magnetisch wirkenden Teile, wie Aktuier- und Steuermittel für das Ventil mit Spule, Anker, Spulenkörper, Steuerleitung oder dergleichen.

Die Erfindung führt auf ein pneumatisches System mit einer erfindungsgemäßen Druckluftversorgungsanlage.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen der oben genannten ersten bevorzugten weiterbildenden Variante ist die stromlos offene Magnetventilanordnung zur direkten Schaltung eines Gesamtdruckluftvolumens ausgelegt, also vorzugsweise in Form einer stromlos offenen direkt gesteuerten Entlüftungsmagnetventilanordnung frei von einem Steuerventil ausgeführt. In Weiterbildung des Konzepts der Erfindung kann der Pneumatikteil der Magnetventilanordnung in der Entlüftungsleitung zwischen einem druckseitigen Ventilanschluss (X) und einem entlüftungsseitigen Ventilanschluss (Z) geöffnet sein. Für eine Regeneration des Lufttrockners vorteilhaft, ist eine erste Drossel in einer Druckluftversorgungsleitung oder einer daran direkt angeschlossenen Zweigleitung, - z. B. einer Steuerzweigleitung oder dergleichen - angeordnet. Vorteilhaft ist in einer Entlüftungsleitung oder einer daran direkt angeschlossenen Zweigleitung - z. B. einer Entlüftungszweigleitung oder dergleichen - eine zweite Drossel angeordnet. Die Nennweite der ersten Drossel liegt vorzugsweise unterhalb der Nennweite der zweiten Drossel. Dies führt vorteilhaft dazu, dass ein größter Druckabfall am Lufttrockner erfolgt. Dies wiederum hat eine vergleichsweise hohe Druckwechselamplitude am Lufttrockner zur Folge, was für die Regeneration des Lufttrockners im Rahmen einer Druckwechseladsorption besonders vorteilhaft ist. Bevorzugt ist in der Entlüftungsleitung ein Ventil zum Halten eines Restdrucks angeordnet ist. Im Rahmen einer bevorzugten Weiterbildung der ersten Variante ist in einer Entlüftungsleitung ein Rückschlagventil und/oder ein Relaisventil angeordnet. Bevorzugt wird eine Restdruckfunktion über einen vorgesteuerten Relaiskolben des Relaisventils erreicht. Die Restdruckfunktion ist vorzugsweise ausgelegt, einen Restdruck insbesondere von 1 bis 3 bar- vorzugsweise im Bereich von oberhalb 1 bar, insbesondere wenigstens 1,5 bar- im System, d.h. in der Druckluftversorgungsanlage und/oder der Pneumatikanlage zu halten. Insbesondere im Hinblick auf Luftfederanlagen hat sich ein solcher Restdruck als vorteilhaft erwiesen, um in den Bälgen einer Luftfederanlage einen ausreichenden Restdruck zu halten. Dies vermeidet ein ungewolltes Zusammenklappen oder Einklemmen der Bälge.

Im Rahmen der oben genannten besonders bevorzugten weiterbildenden zweiten Variante ist vorgesehen, die Magnetventilanordnung zur indirekten Schaltung eines Gesamtdruckluftvolumens mit einem Steuerventil zur Steuerung eines Relaisventils zu versehen, das einem Gesamtdruck ausgesetzt ist, d. h. die Magnetventilanordnung ist in Form einer normal entlüftenden indirekt vorgesteuerten Anordnung gebildet. Vorteilhaft bildet das vorgesteuerte Relaisventil eine Restdruckfunktion aus. Vorteilhaft erübrigt sich dadurch ein separates Rückschlagventil. Ein Druckbegrenzer beim Relaisventil lässt sich vorteilhaft über eine Ventilfeder realisieren. Grundsätzlich kann bei allen weiterbildenden Varianten der Erfindung ein Druckbegrenzer vorgesehen sein, insbesondere auch an einem Ventil einer Magnetventilanordnung zur direkten Schaltung eines Druckluftvolumens.

Im Rahmen der oben genannten dritten besonders bevorzugten weiterbildenden Variante der Erfindung ist die Magnetventilanordnung zur indirekten Schaltung eines Gesamtdruckluftvolumens vorgesehen und weist ein einem Teildruck ausgesetztes Steuerventil zur Steuerung eines Relaisventils auf, d. h. die Anordnung ist als eine indirekt vorgesteuerte schnell entlüftende Magnetventilanordnung gebildet. Auch bei dieser Anordnung übernimmt das vorgesteuerte Relaisventil eine Restdruckfunktion. Ein separates Rückschlagventil ist vorteilhaft nicht notwendig. Ein Druckbegrenzer kann beim Relaisventil über eine Ventilfeder realisiert werden.

In Weiterbildung des Konzepts der Erfindung bei der zweiten und dritten Variante kann der Pneumatikteil der Magnetventilanordnung in einer Zweigleitung der Druckluftversorgungsleitung zwischen einem druckseitigen Ventilanschluss (X) und einem steuerseitigen Ventilanschluss (Y) zur pneumatischen Ansteuerung eines Relaisventils in der Entlüftungsleitung über die Zweigleitung geöffnet sein.

Darüber hinaus hat es sich bei allen vorgenannten weiterbildenden Varianten als besonders vorteilhaft erwiesen, dass die Magnetventilanordnung eine stromeinstellbare Druckbegrenzung aufweist. Es hat sich gezeigt, dass sich ein Druckbegrenzer, soweit dieser durch eine Federbelastung eines Ventils mittels einer Ventilfeder realisiert ist, nur in gewissen Grenzen einstellen lässt. Andererseits kann es für eine ausreichend flexible Versorgung der Pneumatikanlage, insbesondere Luftfederanlage, mit einer Druckluftversorgungsanlage vorteilhaft sein, einen Druckbegrenzer zur Verfügung zu stellen, der über einen vergleichsweise großen Druckbereich einstellbar ist. Die Erfindung sieht dazu vor, dass die Magnetventilanordnung einen stromeinstellbaren Druckbegrenzer aufweist. Drücke zum zuverlässigen Auffüllen eines Speichers in einer Luftfederanlage können gegebenenfalls sehr unterschiedlich von Drücken zum Auffüllen eines Balgs einer Luftfederanlage sein. Ein stufenlos stromeinstellbarer Druckbegrenzer ermöglicht eine variable und flexibel einstellbare Druckbegrenzung in einem Bereich durchaus zwischen 10 und 30 bar. Außerdem kann in einem solchen Bereich ein ausreichend breites Toleranzfeld von Druckbegrenzungen berücksichtigt werden. Besonders vorteilhaft lässt sich diese Weiterbildung dadurch realisieren, dass der Pneumatikteil der Magnetventilanordnung einen über den Magnetteil stromeinstellbaren Öffnungsdruck aufweist. Je nach Betriebssituation kann bei einer stromlos offenen Magnetventilanordnung ein Maximaldruck der Magnetventilanordnung durch einen geringeren Strom vergleichsweise gering eingestellt und einen höheren Strom vergleichsweise hoch eingestellt werden. Dadurch kann zum einen ein Balg einer Luftfederanlage vor Überladung geschützt sein, beispielsweise vor Überladung oberhalb eines Drucks von 11 bis 13 bar. Auch kann ein Speicher einer Luftfederanlage vor Überladung geschützt sein, beispielsweise oberhalb eines Drucks von 20 bis 25 bar. Ein stromeinstellbarer Druckbegrenzer erweist sich insbesondere dann als vorteilhaft, wenn dieser ein mechanisch wirkendes Druckbegrenzungsventil ersetzen kann.

Im Rahmen einer besonders bevorzugten Weiterbildung ist die Druckluftversorgungsanlage in Form einer Einrichtung mit einer Gehäuseanordnung gebildet, die eine Anzahl von Gehäusebereichen aufweist. Dadurch kann die Druckluftversorgungsanlage je nach Bedarf in eine vorteilhafte Anzahl von Bereichen segmentiert bzw. modular aufgebaut werden. Vorzugsweise ist in einem ersten Bereich ein Antrieb angeordnet. Vorteilhaft ist in einem zweiten Bereich der vom Antrieb antreibbare Luftverdichter angeordnet. Vorteilhaft ist in einem mit dem zweiten Bereich über eine Druckquellen-Schnittstelle verbundenen dritten Bereich der Lufttrockner und die Magnetventilanordnung enthalten. Diese Aufteilung hat sich insbesondere durch Anordnung des ersten bis dritten Bereichs in einer U-förmigen Anordnung bewährt. Dadurch können in Einbaulage der Anlage Schnittstellen, wie eine Druckquellen-Schnittstelle oder eine Druckluftversorgungs-Schnittstelle oder eine Entlüftungs-Schnittstelle, bevorzugt horizontal, grundsätzlich je nach Kundenerfordernis angeordnet werden. Grundsätzlich kann diese Aufteilung auch durch Anordnung des ersten bis dritten Bereichs in einer anderen als U-förmigen Anordnung, z. B. einer Z-förmigen Anordnung realisiert werden.

Vorzugsweise weist der Lufttrockner einen ein Trockenmittel enthaltenden von Druckluft durchströmbaren Trockenbehälter auf, der eine Trockenmittel freie Einbuchtung bildende Wandung aufweist. Ein solcher Trockenbehälter hat sich als besonders geeignet erwiesen, die Magnetventilanordnung wenigstens teilweise, vorzugsweise vollständig, in der Einbuchtung aufzunehmen. Dadurch kann die Magnetventilanordnung einerseits durch den Trockenbehälter vor Außeneinflüssen geschützt werden und andererseits kann die in der Magnetventilanordnung sich entwickelnde Wärme vorteilhaft zur Trocknerregeneration genutzt sein.

Vorzugsweise ist ein Deckel des Trockenbehälters über der Einbuchtung angeordnet. Ein solcher Deckel hat vorzugsweise einen wenigstens teilweise durch eine Dichtung, insbesondere eine Formdichtung, in pneumatische Leitungen unterteilten Entlüftungsbereich. Dadurch kann vorteilhaft ein Entlüftungsdom des Lufttrockners wenigstens teilweise im Bereich der Gehäuseanordnung angeordnet werden. Insbesondere ist ein Entlüftungsdom des Lufttrockners wenigstens teilweise im Bereich eines Deckels angeordnet, wobei der Deckel über der Einbuchtung des Trockenbehälters vorgesehen ist. Vorteilhaft bildet zudem bauraumsparend der Trockenbehälter und/oder der Deckel einen Teil der Gehäuseanordnung. Der Deckel kann besonders vorteilhaft mit einer integrierten Dichtung und/oder einem Rückschlagventil zum dichten Verschließen der Einbuchtung und der darin enthaltenen Magnetventilanordnung vorgesehen sein. Der Deckel kann neben einer pneumatischen Funktionalität - wie der eines Entlüftungsdoms mit pneumatischen Leitungen, Ventilen und Anschlüssen - auch eine elektrische bzw. steuerelektrische Funktionalität aufweisen. Der Deckel kann insbesondere ausgebildet sein, pneumatische Schnittstellen - wie die Druckluftversorgungs-Schnittstelle und die Entlüftungs-Schnittstelle oder ein Ventil in Form eines Rückschlagventils - zur Verfügung zu stellen. Der Deckel kann insbesondere eine elektrische Schnittstelle - wie eine Steuer-Schnittstelle - zur Verfügung zu stellen.

Im Rahmen einer besonders bevorzugten Weiterbildung ist vorgesehen, dass die Magnetventilanordnung einen mit Elastomer und/oder Metall gebildeten Anker und/oder Ventilsitz aufweist. Vorzugsweise weist ein Magnetventil der Magnetventilanordnung einen Ventilkörper bzw. eine Ventildichtung und/oder einen Ventilsitz auf, die auf einem Elastomer anschlagen. Grundsätzlich kann ein Ventilkörper und/oder ein Ventilsitz auch auf einem Metall anschlagen - ein Elastomer hat sich darüber hinaus als besonders vorteilhaft zum Dichten eines Magnetventils erwiesen. Andererseits kann ein Elastomer dazu neigen, sich im Betriebsfalle - je nach Anteil von Weichmachern - zu setzen und in ungünstigen Fällen kann ein Elastomer dazu führen, dass ein Ventilkörper bzw. eine Ventildichtung am Ventilsitz klebt oder anfriert. Dies kann dazu führen, dass der Anker des Magnetventils blockiert (sog. Ventilkleber). Die Kombination des vorliegenden Konzepts einer stromlos offenen Magnetventilanordnung und ein gemäß der Weiterbildung vorgesehenes Elastomer am Ventilkörper oder Anker bzw. Ventildichtung und/oder Ventilsitz beseitigt diese Nachteile. Da bei einer stromlos offenen Magnetventilanordnung das Elastomer nur im Betriebsfalle das Ventil abdichtet ist ein oben genannter Ventilkleber sicher vermieden.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen.

Der Einfachheit halber sind dort wo sinnvoll, nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

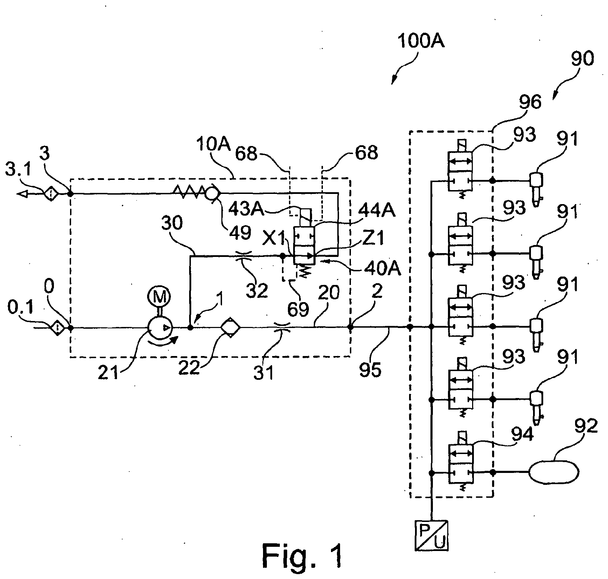

Fig. 1 ein Schaltungsdiagramm eines ersten pneumatischen Systems 100A mit einer Luftfederanlage und einer ersten Druckluftversorgungsanlage, nämlich mit einer Magnetventilanordnung in Form einer direkt gesteuerten Entlüftungs-Magnetventilanordnung gemäß einer ersten weiterbildenden Variante der Erfindung;

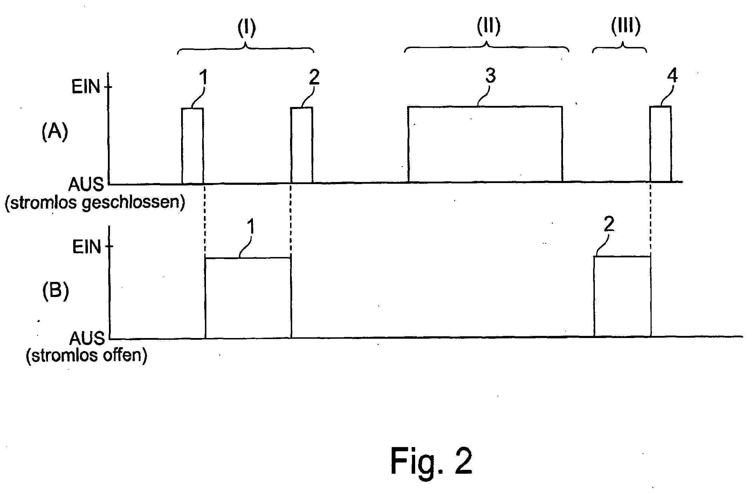

Fig. 2 ein schematischer Vergleich von Bestromungszuständen (Ansteuerungen Ein/Aus) einer stromlos geschlossenen Magnetventilanordnung (A) einerseits und einer stromlos offenen Magnetventilanordnung (B) gemäß einer der beschriebenen Ausführungsformen andererseits - dies für die Betriebszustände (I) Fördern, (II) Entlüften/Absenken, (III) Heben aus Speicher;

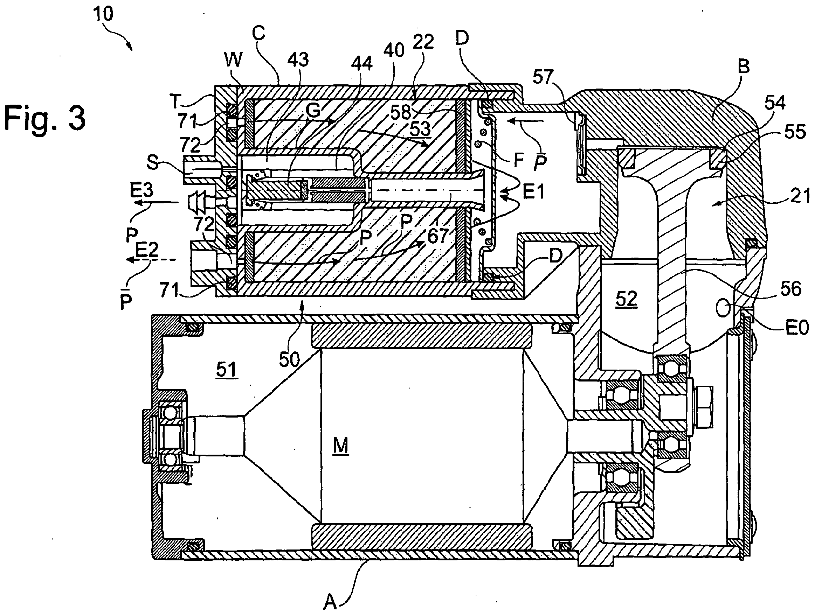

Fig. 3 eine bevorzugte konstruktive Realisierung einer Druckluftversorgungsanlage mit einer bevorzugten stromlos offenen Magnetventilanordnung zur Verwendung bei der ersten Druckluftversorgungsanlage der Fig. 1 - dies mit symbolischer Darstellung einer Entlüftungsströmung P und einer Belüftungsströmung *P̅* ;

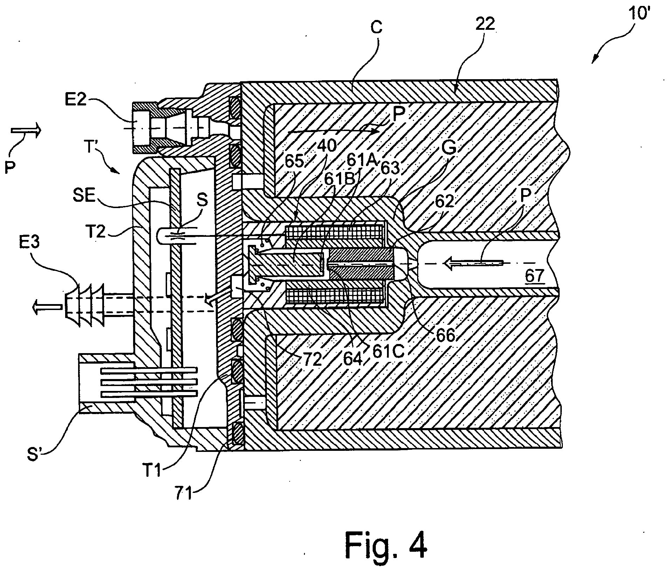

Fig. 4 eine vergrößerte Ansicht der Magnetventilanordnung der Fig. 3 in stromlos offenem Zustand mit symbolischer Entlüftungsströmung P;

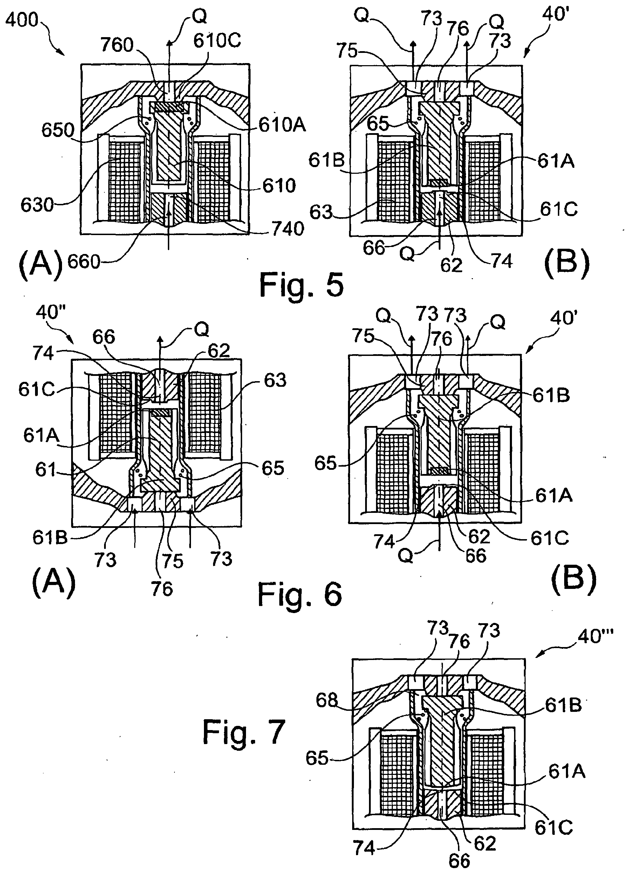

Fig. 5 in Ansicht (B) eine vergrößerte Detaildarstellung einer ersten abgewandelten stromlos offenen Magnetventilanordnung in stromlos offenem Zustand zur Verwendung bei einer Druckluftversorgungsanlage der Fig. 1 - dies im Unterschied zu einer üblichen stromlos geschlossenen Magnetventilanordnung in Ansicht (A);
Fig. 6 in Ansicht (A) und (B) zwei weitere Abwandlungen einer stromlos offenen Magnetventilanordnung zur Verwendung bei einer Druckluftversorgungsanlage der Fig. 1, wobei in der Abwandlung (A) eine Druckseite unter dem Anker liegt und in der Abwandlung (B) - wie bei Fig. 5 (B) - eine Druckseite über dem Anker liegt;
Fig. 7 eine weitere Abwandlung einer Magnetventilanordnung, bei welcher der Ventilsitz als metallischer Anschlag gebildet ist und die darüber hinaus wie in Fig. 5 (B) oder Fig. 6 (B) realisiert ist;
Fig. 8 ein Schaltungsdiagramm eines zweiten pneumatischen Systems 100B mit einer Luftfederanlage und einer zweiten Druckluftversorgungsanlage, nämlich mit einer Magnetventilanordnung in Form einer normal entlüftenden indirekt vorgesteuerten Magnetventilanordnung gemäß einer zweiten weiterbildenden Variante der Erfindung;
Fig. 9 ein Schaltungsdiagramm eines dritten pneumatischen Systems 100C mit einer Luftfederanlage und einer dritten Druckluftversorgungsanlage, nämlich mit einer Magnetventilanordnung in Form einer schnell entlüftenden indirekt vorgesteuerten Magnetventilanordnung gemäß einer dritten weiterbildenden Variante der Erfindung.

Fig. 1 zeigt ein pneumatisches System 100A mit einer Druckluftversorgungsanlage 10A und einer Pneumatikanlage 90 vorliegend in Form einer Luftfederanlage. Für identische oder ähnliche Teile oder Teile identischer oder ähnlicher Funktionen sind, wo zweckmäßig, gleiche Bezugszeichen verwendet. Die Luftfederanlage weist dazu eine Anzahl von vier so genannten Bälgen 91 auf, die jeweils einem Rad eines nicht näher dargestellten Fahrzeugs zugeordnet sind sowie einen Speicher 92 zur Speicherung schnell verfügbarer Druckluft für die Bälge 91. Die Bälge 91 und der Speicher 92 sind - vorliegend in einem Ventilblock 96 mit fünf Ventilen - jeweils über ein stromlos geschlossenes Magnetventil 93, 94, an eine gemeinsame, eine Galerie 95 bildende Pneumatikleitung angeschlossen, welche die pneumatische Verbindung zwischen der Druckluftversorgungsanlage 10 und der Pneumatikanlage 90 bildet. Der Ventilblock 96 kann in einer abgewandelten Ausführungsform andere oder weniger Magnetventile und/oder in einem 2-fach Ventilblock angeordnete Magnetventile aufweisen. Unter einer Galerie ist ganz allgemein jede Art einer Sammelleitung zu verstehen, von welcher Zweigleitungen zu Bälgen 91 bzw. eine Leitung zur Druckluftversorgungsanlage 10A abgehen.

Die Druckluftversorgungsanlage 10A dient zum Betreiben der Pneumatikanlage 90 in Form der Luftfederanlage und versorgt die Galerie 95 derselben über einen Druckluftanschluss 2. Die Druckluftversorgungsanlage 10A weist außerdem einen Entlüftungsanschluss 3 und eine Luftzuführung 0 mit einer Ansaugung auf. In Befüllrichtung stromabwärts des Druckluftanschlusses 2 ist die Luftfederanlage mit den steuerbaren Magnetventilen 93, 94 angeordnet. Dem Entlüftungsanschluss 3 in Entlüftungsrichtung stromabwärts nachgeschaltet bzw. der Luftzuführung 0 stromaufwärts vorgeschaltet ist jeweils ein Filter 3.1 bzw. 0.1.

In einer pneumatischen Verbindung zwischen Luftzuführung 0 und Druckluftzuführung 1 weist die Druckluftversorgungsanlage 10A darüber hinaus einen Luftverdichter 21 in Form eines Kompressors auf, der über einen Motor M angetrieben zur Versorgung der Druckluftzuführung 1 mit Druckluft vorgesehen ist. In einer pneumatischen Verbindung zwischen Druckluftzuführung 1 und Druckluftanschluss 2 ist weiter ein Lufttrockner 22 und eine erste Drossel 31, hier als Regenerationsdrossel, angeordnet. Der Filter 0.1, die Luftzuführung 0, der Luftverdichter 21, die Druckluftzuführung 1, der Lufttrockner 22 und die erste Drossel 31 sind zusammen mit dem Druckluftanschluss 2 in einer zur Galerie 95 führenden Druckluftversorgungsleitung 20 in dieser Reihenfolge angeordnet.

In einer pneumatischen Verbindung zwischen Druckluftzuführung 1 und Entlüftungsanschluss 3 der Druckluftversorgungsanlage 10A ist eine Entlüftungsventilanordnung in Form einer steuerbaren - dem Konzept der Erfindung folgend - stromlos offenen Magnetventilanordnung 40A mit einem Magnetteil 43A und einem Pneumatikteil 44A für einen Entlüftungsanschluss 3 zum Ablassen von Luft vorgesehen. Die Magnetventilanordnung 40A ist in einer die pneumatische Verbindung bildenden Entlüftungsleitung 30 mit einer zweiten, hier als Entlüftungsdrossel, dienenden Drossel 32 und dem Entlüftungsanschluss 3 angeordnet. Anders ausgedrückt ist bei der stromlos offenen Magnetventilanordnung 40A in nicht angesteuertem Zustand des Magnetteils 43A, der Pneumatikteil 44A geöffnet. Konkret ist vorliegend die Magnetventilanordnung 40A zur direkten Schaltung eines Druckluftvolumens ausgelegt. Der unmittelbar über den Magnetteil 43 aktuierbare Pneumatikteil 44A in der Entlüftungsleitung 30 der Druckluftversorgungsleitung 20 ist zwischen einem druckseitigen Ventilanschluss X1 und einem entlüftungsseitigen Ventilanschluss Z1 geöffnet.

Mit Vorteil versehen ist ein druckluftanschlussseitiger eine pneumatische Kammer bildender Leitungsabschnitt der Entlüftungsleitung 30 an der Druckluftzuführung 1 zur pneumatischen Anbindung der Magnetventilanordnung 40A an die Druckluftversorgungsleitung 20 angeschlossen. Dies hat zur Folge, dass im Falle einer Entlüftung der Druckluftversorgungsanlage 10A über die Entlüftungsleitung 30 Druckluft entlüftet wird, welche vor dem Lufttrockner 22 entnommen wird, also vereinfacht gesagt ungetrocknete Luft.

Aus Fig. 1 ist erkennbar, dass die Druckluftversorgungsanlage 10A mit einer Magnetventilanordnung 40A in Form einer direkt gesteuerten Entlüftungs-Magnetventilanordnung ohne ein Steuerventil ausgebildet ist und über eine Steuerleitung 68 eine direkte Schaltung des gesamten Druckluftvolumens möglich ist. Vorliegend sieht die Magnetventilanordnung 40A ein einziges Magnetventil als Entlüftungsventil vor. Ein Steuerventil ist nicht vorgesehen. Dies erlaubt ein schnelles und flexibles Entlüften der Pneumatikanlage 90 bzw. Entlüften der Druckluftversorgungsanlage 10A ohne ein zusätzliches Steuerventil. Vorteilhaft lassen sich dadurch Bauteile und Bauraum einsparen. Auch bestehen vorteilhaft keine wesentlichen Anforderungen an einen Mindestvorsteuerdruck zum Betrieb der Druckluftversorgungsanlage 10A. So lassen sich prinzipiell eine Vielzahl von Betriebszuständen auch im Hinblick auf den Lufttrockner 22 mit dem vorliegend beschriebenen Konzept einer Druckluftversorgungsanlage in verbesserter Weise realisieren, da die Magnetventilanordnung 40A mit einem einzigen stromlos offenen Magnetventil gebildet ist, das über die Steuerleitung 68 angesteuert wird.

Im Einzelnen ergibt sich die Funktionsweise der Druckluftversorgungsanlage 10A, anhand von Fig. 1 verdeutlicht, wie folgt. Die Druckluftzuführung 1 wird durch Ansaugen von Luft über den Filter 0.1 und die Luftzuführung 0 mit Druckluft versorgt, indem der über den Motor M angetriebene Luftverdichter 21 angesaugte Luft komprimiert. Die Pneumatikanlage 90 in Form der Luftfederanlage wird aus der Druckluftzuführung 1 über den Lufttrockner 22 und die erste Drossel 31 mit Druckluft versorgt. Dazu ist die Druckluftversorgungsleitung 20 der Druckluftversorgungsanlage 10A über den Druckluftanschluss 2 mit der Galerie 95 der Pneumatikanlage 90 verbunden.

Beim Erreichen des Speicherenddrucks in der Pneumatikanlage 90, vorliegend in einem Druckbereich von etwa 15 bis 20 bar im Speicher und 5 bis 10 bar in den Bälgen, wird die Druckluftversorgungsanlage 10A entlüftet. Für die Magnetventilanordnung 40A ist für die zweite Drossel 32 ein größeres Nennweitenmaß vorgesehen als für die erste Drossel 31, damit ein für die Regeneration des Lufttrockners möglichst große Druckwechselamplitude entstehen kann. Dies erlaubt eine vorteilhafte Entlüftung der Druckluftversorgungsanlage 10A und/oder Regeneration des Lufttrockners 22.

So wird zum Befüllen eines Speichers 92 zunächst die Entlüftungsleitung 30 durch Bestromung der Magnetventilanordnung 40A mit einem Steuerstrom geschlossen, um einen Druckaufbau im Speicher 92 zu ermöglichen. Vorliegend kann ein Entlüften der Druckluftversorgungsanlage 10A nach Erreichen des Speicherenddrucks, d.h. beim Erreichen des so genannten Speicherfüllen-Endes, durch Abschalten des Steuerstromes für einen Magnetteil 43A der stromlos offenen Magnetventilanordnung 40A erfolgen. Ein Entlüften im Falle einer Fahrzeugabsenkung im Regelbetrieb kann durch die bereits geöffnete - da stromlos offene - Magnetventilanordnung 40A problemlos erfolgen. Dabei ist durch einen geeigneten Druckabfall über den Lufttrockner 22 eine Regeneration des Lufttrockners 22 als auch ein flexibles und schnelles Entlüften durch Auslegung der Nennweite der Drosseln 31, 32 zweckmäßig gewährleistet.

Mit Vorteil versehen weist die Druckluftversorgungsanlage 10A darüber hinaus ein Rückschlagventil 49 auf, welches vorliegend eine Restdruckhaltefunktion hat. Zum einen dient das Rückschlagventil 49 zur Verhinderung eines Fremdkörpereintrags in die Druckluftversorgungsanlage 10A zusätzlich zum Filter 3.1. Darüber hinaus dient die Restdruckhaltefunktion des Rückschlagventils 49 zur Aufrechterhaltung eines Mindestdrucks in der Druckluftversorgungsanlage 10A. Aufgrund der über der Drossel 31 zur Galerie 95 offenen Druckluftversorgungsleitung 20 liegt der Restdruck auch für die Pneumatikanlage 90 in Form der Luftfilteranlage vor. Dieser Restdruck - vorliegend in Höhe von 1,5 bar - verhindert ein Zusammenkleben der Bälge 91 für den Fall, dass ein Entlüften der Druckluftversorgungsanlage 10A zusammen mit der Pneumatikanlage 90 erfolgt. Konkret wird dadurch verhindert, dass die Balgwände der Bälge 91 eingeklemmt oder beschädigt werden.

Außerdem ist bei einem Pneumatikteil 44A der Magnetventilanordnung 40A vorteilhaft ein stromeinstellbaren Druckbegrenzer 69 des Pneumatikteils 44A vorgesehen sein, bei welchem sich unter Abgreifen des Druckes in der Entlüftungsleitung 30 der Druck für die Magnetventilanordnung 40A beschränken lässt. Auf diese Weise kann selbst bei einem vergleichsweise hohen Betriebsdruck eine gewisse Variabilität bzw. Toleranz hinsichtlich einer Druckbegrenzung erreicht werden. Vorliegend wird dies dadurch realisiert, dass der Schaltpunkt des Pneumatikteils 44A abhängig von der Stromstärke eines Steuerstroms im Magnetteil 43A variabel einstellbar ist. Je nach Fahrzeugsituation, Temperatur des Systems oder sonstiger druckrelevanter Systembelange kann der Schaltpunkt des Pneumatikteils 44A stromstärke-variabel eingestellt werden. Durch den stromgesteuerten Druckbegrenzer 69 ist sichergestellt, dass der Galeriedruck den statischen Öffnungsdruck eines als Magnetventil 93 ausgebildeten Niveauregelventils und einen Innendruck eines Balgs 91 nicht übersteigt. Zusätzlich kann auch eine Druckmessung in der Galerie 95 oder im Speicher 92 erfolgen.

Üblicherweise kann ein Balgdruck die Magnetventile 93 nicht aufdrücken und unterstützt eine Ventilfeder, indem vorliegend ein Balgdruck über einem Ventilanker anliegt. Bei Druckschwankungen im Balg 91, wie er bei Schlechtwegstrecken oder sonstigen dynamischen, Einflüssen auftreten kann, wird so vermieden, dass die Magnetventile 93 aufgedrückt werden. Praktisch nur im Falle einer ungewollt anhaltenden Förderung des Luftverdichters kann ein Galeriedruck so hoch werden, dass ein Balgventil aufgedrückt und das Fahrzeug ungewollt angehoben wird. Das könnte zu instabilen Fahrzuständen führen. Ein Druckbegrenzer vermeidet sicher einen solchen Fall bei Anlagen mit geschlossenen Entlüftungsschaltungen. Bei einer vorliegend beschriebenen stromlos offenen Schaltung wird eine solche Gefahr jedoch per se vermieden, da ein Luftverdichter zumeist ins Freie fördern würde.

Fig. 2 zeigt für drei verschiedene Betriebsmodi - Fördern (I), Entlüften bzw. Absenken (II) und Heben aus Speicher 92 (III) - den Bestromungszustand der stromlos offenen Magnetventilanordnung 40A in Ansicht (B) gemäß einer bevorzugten Ausführungsform der Erfindung. Diesem gegenüber gestellt ist - zur Veranschaulichung- als Vergleich der Bestromungszustand eines stromlos geschlossenen Magnetventils in Ansicht (A) welches durch das Magnetventil 40A ersetzt wird. Der Ansteuerzustand "EIN" beschreibt dabei eine Bestromung einer Magnetventilanordnung und der Ansteuerzustand "AUS" bezeichnet dabei einen nicht bestromten Zustand einer Magnetventilanordnung.

Aus der Ansicht (B) der Fig. 2 ist ersichtlich, dass zum Fördern (I) die stromlos offene Magnetventilanordnung 40A vom Förderbeginn bis zum Befüllungsende der Bälge 91 oder des Speichers 92 bestromt, d. h. geschlossen, ist (Nr. 1). Für den Betriebszustand (II), d.h. zum Entlüften oder Absenken entfällt eine Bestromung der stromlos offenen Magnetventilanordnung 40A- durch Öffnen eines der Magnetventile 93, 94 kann die Pneumatikanlage 90 in Form der Luftfederanlage durch das stromlos offene Magnetventil 40A entlüftet werden und damit die Fahrzeugkarosserie abgesenkt werden. Ein Heben der Fahrzeugkarosserie kann über in dem Speicher 92 gespeicherte Druckluft mittels Öffnen des Magnetventils 94 und gegebenenfalls aller oder einzelner der Magnetventile 93 erfolgen. Die stromlos offene Magnetventilanordnung 40A wird für diesen Betriebszustand (III) bestromt, d.h. geschlossen (Nr. 2).

In Ansicht (A) ist zum Vergleich die Bestromung einer üblicherweise stromlos geschlossenen Magnetventilanordnung gezeigt. Es zeigt sich, dass für den Betriebszustand (I) eine solche stromlos geschlossene Magnetventilanordnung normalerweise zweimal geöffnet werden muss (Nr. 1 und Nr. 2), nämlich wenigstens im Falle einer Entlüftung vor dem Fördern, falls ein Restdruck zu entlüften ist, einerseits und einer Entlüftung nach dem Fördern beim Befüllungsende andererseits, soweit nicht überschüssiges Druckpotenzial anderweitig, z.B. durch einen Druckaustausch zwischen Komponenten eines pneumatischen Systems erfolgen kann. Ebenso muss eine stromlos geschlossene Magnetventilanordnung für einen Betriebszustand (II) durch dauerhafte Bestromung geöffnet werden (Nr. 3), um eine Entlüftung bzw. ein Absenken der Fahrzeugkarosserie zu ermöglichen. Schließlich muss in einem Betriebszustand (III) nach dem Heben einer Fahrzeugkarosserie mit Druckluft aus einem Speicher 92 eine stromlos geschlossene Magnetventilanordnung einmal zum Entlüften der Druckluftversorgungsanlage bestromt, d.h. geöffnet werden (Nr. 4).

Im Ergebnis zeigt sich, dass die Taktrate einer Betätigung bzw. Ansteuerung, d. h. Bestromung bzw. Schalthäufigkeit der stromlos offenen Magnetventilanordnung 40A im Unterschied zu einer stromlos geschlossenen Magnetventilanordnung geringer ist, wenn alle Betriebszustände (I), (II) und (III) zusammen betrachtet werden. Es hat sich gezeigt, dass dies insbesondere für schnell und flexibel zu betätigende Druckluftversorgungsanlagen, beispielsweise zur Verwendung in einem Geländefahrzeug oder einem SUV relevant wird. Für häufig wechselnde Betriebszustände (I), (II), und (III) hat sich eine Druckluftversorgungsanlage 10A mit einer stromlos offenen Magnetventilanordnung 40A als besonders vorteilhaft erwiesen. Darüber hinaus ist ein langanhaltender Kontakt von Ventilkörper und Ventilsitz bei der stromlos offenen Magnetventilanordnung 40A vorteilhaft zur Vermeidung von Ventilklebern unterbunden.

Im Rahmen einer besonders bevorzugten Ausführungsform ist die Druckluftversorgungsanlage 10, 10A, 10B, 10C in Form einer Einrichtung mit einer Gehäuseanordnung 50 gebildet, die eine Anzahl von Bereichen aufweist, wobei in einem ersten Bereich 51 ein Motor M und/oder in einem zweiten Bereich 52 der vom Motor M antreibbare Luftverdichter 21 und/oder in einem mit dem zweiten Bereich 52 über eine Druckquellen-Schnittstelle E1 verbundenen dritten Bereich 53 der Lufttrockner 22 und die Magnetventilanordnung 40, 40A, 40B, 40C angeordnet ist. Fig. 3 und Fig. 4 zeigen konkret zwei konstruktiv realisierte bevorzugte Ausführungsformen einer Druckluftversorgungsanlage 10, 10' mit einer stromlos offenen Magnetventilanordnung 40. Die Druckluftversorgungsanlagen 10, 10' sind jeweils als Einrichtung mit einer Gehäuseanordnung 50, die eine Anzahl von Gehäusebereichen aufweist, realisiert. In einem ersten Bereich 51 ist ein Antrieb in Form eines Motors M und in einem zweiten Bereich 52 der vom Motor M antreibbare Luftverdichter 21 angeordnet. Der Luftverdichter 21 weist dazu einen im Verdichtungsraum 54 hin und her bewegbaren Kolben 55 auf, der über eine Welle und ein Pleuel 56 vom Motor M angetrieben wird. Dem Verdichtungsraum 54 wird Luft über eine Luftzuführungs-Schnittstelle E0 der oben genannten Luftzuführung 0 zugeführt. Am Ausgang des Verdichtungsraums 54 befindliche Druckluft wird über ein Auslassventil 57 oder dergleichen einer Druckquellen-Schnittstelle E1 für die oben genannte Druckluftzuführung 1 übergeben. Die Druckluft wird in einen dritten Bereich 53 der Druckluftversorgungsanlage 10, 10' abgegeben. Der dritte Bereich 53 enthält den Lufttrockner 22 mit Trockenbehälter 58 und die - bei der Druckluftversorgungsanlage 10' der Fig. 4 größer dargestellte - stromlos offene Magnetventilanordnung 40. Den Gehäusebereichen sind entsprechende Gehäuseteile A, B, C zugeordnet, die gegebenenfalls über eine oder mehrere Dichtungen D gegeneinander abgedichtet sind. Bei den Druckluftversorgungsanlagen 10, 10' ist dem dritten Bereich 53 ein Gehäuseteil C und ein das Gehäuseteil C bodenseitig abschließender Deckel T bzw. in Fig. 4 Deckel T' zugeordnet.

Vorteilhaft weist der Lufttrockner 22 einen ein Trockenmittel enthaltenden von Druckluft durchströmbaren Trockenbehälter 58 auf, der eine eine trockenmittelfreie Einbuchtung G bildende Wandung W aufweist, wobei die Magnetventilanordnung 40,40A, 40B, 40C wenigstens teilweise, vorzugsweise vollständig, in der Einbuchtung G angeordnet ist.

Das dritte Gehäuseteil C ist vorliegend durch eine Wandung W des mit Trockengranulat gefüllten Trockenbehälters 58 und dem Deckel T bzw. in Fig. 4 Deckel T' gebildet. Das Trockengranulat wird durch eine Feder F im Trockenbehälter 58 unter Druck gehalten. Die Wandung W wiederum bildet bodenseitig des Trockenbehälters 58 eine symmetrisch, d.h. vorliegend parallel und mittig, zu einer Achse des Trockenbehälters 58 angeordnete Einbuchtung G, die frei von Trockenmittel ist. In der Einbuchtung G ist die Entlüftungsventilanordnung in Form der stromlos offenen Magnetventilanordnung 40 symmetrisch zur Achse des Trockenbehälters 58 untergebracht. Bodenseitig schließt der Deckel T, T' die Einbuchtung G zusammen mit der darin befindlichen Magnetventilanordnung 40 dicht ab.

Ein Deckel T , T' des Trockenbehälters 58 ist vorteilhaft über der Einbuchtung (G) angeordnet und weist einen wenigstens teilweise durch eine Dichtung 71 in pneumatische Leitungen 72 unterteilten Entlüftungsbereich auf. Vorliegend nimmt der Deckel T, T' als Teil der Gehäuseanordnung 50 der Druckluftversorgungsanlage 10 nicht nur Dichtungen 71 zum dichten Abschließen des Gehäuseteils C der Druckluftversorgungsanlage 10, 10' auf. Darüber hinaus ragen in den Deckel T, T' als Teil eines Entlüftungsdoms des Lufttrockners 22 Leitungen 72, welche an entsprechende Durchführungen im Trockenbehälter 58 anschließen und im Deckel T, T' geführt sind. Zur Bildung der Leitungen 72 sind die Dichtungen 71 im Deckel T, T' als Formdichtung ausgeführt. Außerdem wird der Deckel T, T' durch Schnittstellen durchbrochen, wobei E2 eine Druckquellen-Schnittstelle bei dem Druckluftanschluss bildet und E3 eine Entlüftungs-Schnittstelle beim Entlüftungsanschluss 3 der Druckluftversorgungsanlage 10 bildet. Die Steuer-Schnittstelle S dient zur Anbindung an die oben genannte Steuerleitung 68 der Magnetventilanordnung 40.

Vorliegend ist die stromlos offene Magnetventilanordnung 40 - sowohl die Anordnung des Pneumatikteils 44 als auch des Magnetteils 43 der Magnetventilanordnung 40 - in einem gemeinsamen Ventilgehäuse, also modular, ausgeführt und in der Einbuchtung G der Wandung W des Gehäuseteils C angeordnet. Unter Weiterbildung des Konzepts der Erfindung lässt sich mit dieser Ausführungsform eine besonders kompakte Anordnung der stromlos offenen Magnetventilanordnung 40 im Trockenbehälter 58 d.h. konkret in der durch diesen gebildeten Einbuchtung G erreichen. Insbesondere ist dabei ein Ventilsitz und ein Ventilkörper des Pneumatikteils in der Einbuchtung G angeordnet. Dadurch ist die Magnetventilanordnung 40 besonders gut geschützt gegen äußere Einflüsse im Trockenbehälter 58 untergebracht.

Insgesamt ist durch die U-förmige Anordnung des ersten, zweiten und dritten Bereichs 51, 52, 53 und der zugeordneten ersten, zweiten und dritten Gehäuseteile A, B, C eine bauraumsparende Druckluftversorgungsanlage 10 zur Verfügung gestellt, welche zudem horizontale Schnittstellen - nämlich S, E0, E1, E2, E3 - ermöglicht. Zudem wird eine Gewichtseinsparnis dadurch erreicht wird, dass die Außenkontur des Trockenbehälters 58 und des Deckels T, T' des Lufttrockners 22 als Teil C der Gehäuseanordnung 50 genutzt wird.

Fig. 4 zeigt in vergrößerter Darstellung eine mit dem Deckel T' abgewandelte Ausführungsform des in Fig. 3 beschriebenen Lufttrockners 22 bei einer Druckluftversorgungsanlage 10', wobei zweckmäßiger Weise für gleiche oder ähnliche Teile oder Teile gleicher oder ähnlicher Funktion gleiche Bezugszeichen verwendet sind. Die Pfeile zeigen vorliegend eine Entlüftungsströmung P aus der Galerie 95 bei Entlüftung, d.h. bei stromlos offenem Zustand der Magnetventilanordnung 40. Diese ist wie erläutert in einer durch die Wandung W des Gehäuseteils C gebildeten Einbuchtung G des Trockenbehälters 58 vollständig angeordnet. Der Magnetteil 43 wird vorliegend durch einen Spulenkörper 63 und einen einzigen Anker 61 B gebildet, welcher durch den Spulenkörper 63 bei Bestromung - zum Schließen der Magnetventilanordnung 40 - aktivierbar ist. Erkennbar ist der Anker 61B bei stromlosem Spulenkörper 63 so durch eine Ventilfeder 65 festgelegt, dass ein auf dem Anker 61B angebrachtes Ventildichtelement 61A von einem dem Ventildichtelement 61A zugeordneten Ventilsitz 61C abgehoben ist. Die Druckluft kann als Entlüftungsströmung P durch einen die Drossel 32 bildenden Kanal 66 in einem Magnetkern 62 und am Anker 61 B vorbei - also unter Durchfluss des Spulenkörpers 63 - durch einen im Deckel T' geführten Entlüftungsdom, nämlich die Kanäle 72, zur Entlüftungs-Schnittstelle E3 des Entlüftungsanschlusses 3 entweichen. Der Anker 61 B ist in einem nichtmagnetischen Ankerführungsrohr 64 angeordnet. In Fig. 4 ist erkennbar, dass die Magnetventilanordnung 40 in der Einbuchtung G des Trockenbehälters 58 einen Luft durchströmbaren Kanal durch den Trockenbehälter 58 bildet, der einen der Magnetventilanordnung 40 vorgeordneten einbaufreien Freiraum 67 aufweist, wobei der Freiraum 67 und die Magnetventilanordnung 40 axial zueinander angeordnet sind. Der Freiraum 67 ist damit Teil der oben beschriebenen Entlüftungsleitung 30.

In den Deckel T' ist vorliegend auch das hier nicht näher bezeichnete anhand von Fig. 1 erläuterte Rückschlagventil 49 mit Restdruckfunktion eingearbeitet. Die Einarbeitung des Rückschlagventils 49 zusammen mit einem Teil des Entlüftungsdoms im Deckel T' erfolgt strömungsoptimiert, so dass dies einer flexiblen und schnellen Ent- und Belüftung der Druckluftversorgungsanlage 10 bzw. der Pneumatikanlage 90 zuträglich ist. Der Deckel T' ist vorliegend modular aufgebaut. Er weist dazu eine erste Deckelplatte T1 zur Darstellung einer pneumatischen Funktionalität - nämlich der Kanäle 72, der Formdichtung 71 und der Schnittstellen E2, E3 - auf. Der Deckel T' weist auch eine zweite Deckelplatte T2 zur Darstellung einer elektrischen und/oder steuerelektrischen Funktionalität auf - nämlich der Schnittstelle S und einer Steuerelektronik SE auf, welche die Schnittstelle S mit dem Anschluss S' verbindet.

Fig. 5 zeigt in Ansicht (B) eine mit Fig. 6 (B) und Fig. 7 dem Prinzip ähnliche und stromlos offene Stellung der Magnetventilanordnung 40' mit einer symbolisch dargestellten Druckluftströmung Q. Dabei sind für identische oder ähnliche Teile bzw. Teile identischer oder ähnlicher Funktion die gleichen Bezugszeichen wie in Fig. 4 verwendet worden. Die in Richtung zur Entlüftungsströmung P geführte Strömung Q der Fig. 5 (B) verdeutlicht einen Druckluftstrom vom Kanal 66 zu einer die Drossel 32 bildenden Öffnung 74 am Magnetkern 62 und zu zwei mit den in Fig. 4 ersichtlichen Leitungen 72 verbundenen ersten Öffnungen 73. Dabei ist der Anker 61 B bei unbestromtem Spulenkörper 63 durch die Federkraft der Ventilfeder 65 - hier Druckfeder - gegen einen Anschlag 75 gedrückt. Bei Bestromung des Spulenkörpers 63 wird der Anker 61 B gegen die Federkraft der Ventilfeder 65 in den Spulenkörper 63 gezogen, so dass das Ventildichtelement 61A auf dem Ventilsitz 61C zu liegen kommt und die stromlos offene Magnetventilanordnung 40' schließt. Dabei wird eine zweite Öffnung 76 im Anschlag 75 zwischen den beiden ersten Öffnungen 73 freigegeben. Wie aus Ansicht Fig. 5 (A) ersichtlich ist die Funktionsweise für das Beispiel eines stromlos geschlossenen Magnetventils 400 anders. Hier wird der Anker durch die Federkraft der Ventilfeder 650 mit seinem Ventildichtelement 610A gegen die aus einer einzigen Sitzöffnung 760 und dem Ventilsitz 610C gebildete Anordnung gedrückt und schließt so in stromlosen Zustand, d.h. bei unbestromtem Spulenkörper 630 schließt die stromlos geschlossene Magnetventilanordnung 400. Bei Bestromung des Spulenkörpers 630 wird der Anker 610 in den Spulenkörper 630 gegen die Federkraft der Ventilfeder 650 gezogen, so dass das Ventildichtelement 610A vom Ventilsitz 610C abgehoben wird und die Sitzöffnung 760 freigibt. Dadurch kann die Druckluft der Strömung Q von einem Kanal 660 in die eine Drossel bildende Kanalöffnung 740, am Anker 610 vorbei durch die Sitzöffnung 760 strömen.

Fig. 6 (A) zeigt in Abwandlung zur -mit Fig. 5 (B) identischen- Fig. 6 (B) eine stromlos offene Magnetventilanordnung 40", bei welcher ein durch die Druckluft wiederum einer Strömung Q in Richtung zur Entlüftungsströmung P aufgebauter Druck in bestromt geschlossenem Zustand unter dem Anker 61 liegt. Bei der in Fig. 6 (B) und Fig. 5 (B) gezeigten stromlos offenen Magnetventilanordnung 40' liegt ein Druck der Druckluft bei bestromt geschlossenem Zustand über dem Anker 61 B. Fig.6 (A) zeigt dazu eine im wesentlichen gespiegelte Anordnung der Komponenten der Magnetventilanordnung 40" im Vergleich zur Magnetventilanordnung 40'. Die Wirkungsweisen der Ventilfeder 65 in Form einer Druckfeder und die Wirkungsweise des Spulenkörpers 63 sind bereits anhand von Fig. 5 (B) beschrieben worden.

Grundsätzlich weist die Magnetventilanordnung 40, 40A, 40B, 40C vorteilhaft einen mit Elastomer und/oder Metall gebildeten Anker 61 B und/oder Ventilsitz 61 C auf. Fig. 7 zeigt eine zu Fig. 5 (B) und Fig. 6 (B) konstruktiv weitgehend ähnliche und in der Funktionsweise praktisch identische Abwandlung einer stromlos offenen Magnetventilanordnung 40"', bei der im Unterschied zu Fig. 5 (B) und Fig. 6 (B) ein Ventilsitz 61C als metallischer Anschlag ausgeführt ist, welcher einer metallischen Ventildichtung 61A gegenüber liegt. Die Ventildichtung 61A und der Ventilsitz 61C sind dabei bogenförmig gewölbt und kommen bei angepasster Formung der Flächen der Ventildichtung 61A und des Ventilsitzes 61C zueinander ohne elastomeres Ventildichtelement aus, wie es in Fig. 6 (B) und Fig. 5 (B) gezeigt ist.

Fig.8 und Fig. 9 zeigen zwei bevorzugte Ausführungsformen einer Magnetventilanordnung 40B, 40C, bei welchen in der Entlüftungsleitung 30 ein Relaisventil 40.2B, 40.2C zum Halten eines Restdrucks angeordnet ist. Vorliegend ist das Relaisventil 40.2B, 40.2C zum Halten eines Restdrucks im Bereich bis 1 bar, insbesondere eines Restdrucks bis 3 bar ausgebildet. Die Druckluftversorgungsanlage 10B, 10C sieht vor, dass der unmittelbar über den Magnetteil 43B, 43C aktuierbare Pneumatikteil 44B, 44C in einer Zweigleitung ,der Druckluftversorgungsleitung 20 - gemäß Fig.9 in einer Steuerzweigleitung 47 oder gemäß Fig.8 in einer ersten Zweigleitung 47.1 - zwischen einem druckseitigen Ventilanschluss X2 und einem steuerseitigen Ventilanschluss Y2 der Zweigleitung geöffnet ist. Vorliegend ist der Pneumatikteil 44B, 44C in Form eines 3/2-Wegeventils in der Magnetventilanordnung 40B, 40C gebildet und in der Zweigleitung der Druckluftversorgungsleitung 20 zur pneumatischen Ansteuerung eines Relaisventils 40.2B, 40.2C in der Entlüftungsleitung 30 geöffnet. In nicht angesteuertem Zustand des Magnetteils 43B, 43C des Steuerventils 40.1 B, 40.1C ist das Relaisventil 40.2B, 40.2C in einem vorgesteuerten Zustand derart, dass bei anliegendem Druck das Relaisventil 40.2B, 40.2C zwischen einem druckseitigen Ventilanschluss X1' und einem entlüftungsseitigen Ventilanschluss Z1' öffnet.

Konkret zeigt Fig. 8 - für ein nicht näher dargestelltes pneumatisches System 100B mit der bekannten Pneumatikanlage 90 - eine Druckluftversorgungsanlage 10B, bei der wiederum für identische oder ähnliche Teile oder Teile identischer oder ähnlicher Funktion gleiche Bezugszeichen verwendet sind. Im Folgenden werden vor allem die Unterschiede zur vorerwähnten Ausführungsform einer Druckluftversorgungsanlage 10A der Fig. 1 bzw. einer Druckluftversorgungsanlage 10C der folgenden Fig. 9 erläutert. Die vorliegende Druckluftversorgungsanlage 10B sieht eine Magnetventilanordnung 40B vor, die in Form einer so genannten normal entlüftenden vorgesteuerten Anordnung stromlos offen geschaltet ist. Erkennbar besteht die Magnetventilanordnung 40B aus einem stromlos offenen Magnetventil als Steuerventil 40.1 B mit einem Magnetteil 43B und einem Pneumatikteil 44B. Teil des Pneumatikteils 44B ist das Relaisventil 40.2B ist. Es liegt der Gesamtdruck des Luftdruckvolumens in der Druckluftversorgungsleitung 20 am Steuerventil 40.1 B an, das diesen - als stromlos offene Ausführung - in nicht angesteuertem Zustand des Magnetteils 43B als Vorsteuerdruck an das Relaisventil 40.2B weitergibt. Diese Anordnung kann mit vergleichsweise kleinen Nennweiten beim Steuerventil 40.1 B und dennoch vergleichsweisen große Nennweiten der Drossel 32 im Vergleich zur Drossel 31 beim Relaisventil 40.2B realisiert werden, um ein Druckluftvolumen aus der Druckluftversorgungsleitung 20 zur Entlüftung 3 über die Zweigleitung 48 zu entlüften. Zudem wird eine ausreichend hohe Druckwechselamplitude zur Regeneration des Lufttrockners 22 sichergestellt. Aufgrund der parallel geschalteten Drossel 31 in der als weitere Entlüftungsleitung ausgelegten zweiten Zweigleitung 47.2 liegt der Gesamtdruck des unbestromt offenen Steuerventils 40.1 B in der als Entlüftungsleitung ausgelegten ersten Zweigleitung 47.1 und damit auch am Relaisventil 40.2B an. Die Druckluftversorgungsleitung 20 und die zweite Zweigleitung 47.2 ist mit einem ersten Rückschlagventil 49.1 gesichert. Dadurch wird der gesamte Luftstrom bei einer Entlüftung durch das Steuerventil 40.1 B über die Drossel 31 und das zweite Rückschlagventil 49.2, sowie durch den Lufttrockner 22 und die Drossel 32 und das dann vorgesteuert geöffnete Relaisventil 40.2B in die Entlüftungsleitung 30 gelenkt. Im Falle eines Öffnens der Galerie 95 schaltet das Relaisventil 40.2B in Folge des am weiteren steuerseitigen Ventilanschluss Y1' anliegenden Steuerdrucks sofort durch; der Steuerdruck wird über einen offenen druckseitigen Ventilanschluss X2 und einen offenen steuerseitigen Ventilanschluss Y2 des in der ersten Zweigleitung 47.1 stromlos offenen Steuerventils 40.1 B an den weiteren steuerseitigen Ventilanschluss Y1' vermittelt. So öffnet das Relaisventil 40.2B die als noch weitere Entlüftungsleitung ausgelegte dritte Zweigleitung 48 zur Entlüftungsleitung 30 zur Entlüftung 3. Andererseits verhindert das zweite Rückschlagventil 49.2 das Ansteuern des Relaisventils 40.2B über die zweite Zweigleitung 47.2 beim Fördern eines Luftstromes von der Druckluftzuführung 1 zum Druckluftanschluss 2, wenn das Steuerventil 40.1B ebenfalls geschlossen, d. h. bestromt, ist. Auch sperrt das erste Rückschlagventil 49.1 die Galerie 95 zum Lufttrockner 22 ab, um bei wechselnden Drücken in der Pneumatikanlage 90 ein unerwünschtes Befüllen des Lufttrockners 22 zu vermeiden. Dabei ist das Steuerventil 40.1B ebenfalls geschlossen, d. h. bestromt.

Fig. 9 zeigt ein pneumatisches Systems 100C mit einer Druckluftversorgungsanlage 10C und einer Pneumatikanlage 90, vorliegend in Form einer Luftfederanlage. Für identische oder ähnliche Teile oder Teile identischer oder ähnlicher Funktionen sind gleiche Bezugszeichen wie in Fig. 1 verwendet worden. Im Folgenden wird vor allem auf die Unterschiede der Fig. 1 und Fig. 8 Bezug genommen. Im Unterschied zu dem pneumatischen System 100A ist vorliegend das pneumatische System 100C mit einer Druckluftversorgungsanlage 10C ausgestattet, bei welcher die Magnetventilanordnung 40C -wiederum stromlos offen - jedoch vorliegend als eine schnell entlüftende indirekt vorgesteuerte Magnetventilanordnung 40C ausgebildet ist. Konkret heißt dies, dass die stromlos offene Magnetventilanordnung 40C zur indirekten Schaltung eines Druckluftvolumens ein einem Teildruck ausgesetztes Steuerventil 40.1C zur Steuerung eines Relaisventils 40.2C aufweist. Das Steuerventil 40.1C ist dabei in Form eines Magnetventils mit einem Magnetteil 43C und einem Pneumatikteil 44C gebildet, wobei das Relaisventil 40.2C Teil des Pneumatikteils 44C ist. In stromlos offenem Zustand der Magnetventilanordnung 40C befindet sich der Magnetteil 43C des Steuerventils 40.1C in einem nicht angesteuerten Zustand und der Pneumatikteil 44C des Steuerventils 40.1C ist zwischen einem druckseitigen Ventilanschluss X2 und einem steuerseitigen Ventilanschluss Y2 in der als Steuerleitung ausgelegten Steuer-Zweigleitung 47 geöffnet. Der Steuerdruck liegt am steuerseitigen Ventilanschluss Y1' des Relaisventils 40.2C in der Steuer-Zweigleitung 47 an. Somit ist das Relaisventil 40.2C in einem vorgesteuerten Zustand. Es bedarf lediglich eines je nach Auslegung minimalen Betriebsdruckes, um das Relaisventil 40.2C in den offenen Zustand zu versetzen, d.h. zwischen dem druckseitigen Ventilanschluss X1' und dem entlüftungsseitigen Ventilanschluss Z1' in der als Entlüftungsleitung ausgelegten dritten Zweigleitung 48 zu öffnen. Vorteilhaft bei dieser schnell entlüftenden Anordnung für die Druckluftversorgungsanlage 10C ist, dass aufgrund der vergleichsweise geringen Nennweite der ersten Drossel 31 in der Druckluftversorgungsleitung 20 im Vergleich zu der größeren Nennweite der zweiten Drossel 32 in der als Entlüftungsleitung ausgelegten dritten Zweigleitung 48 lediglich ein kleiner Teildruck des Gesamtdrucks eines Druckluftvolumens in der Druckluftversorgungsleitung 20 zur Steuerung des Relaisventils 40.2C über das Steuerventil 40.1C erforderlich ist. Gleichwohl wird das Haupt-Druckluftvolumen über die dritte Zweigleitung 48 und die Drossel 32 sowie das Relaisventil 40.2C zur Entlüftung 3 entlüftet. Ein Vorteil dieser schnell entlüftenden Magnetventilanordnung 40C bei der Druckluftversorgungsanlage 10C ist, dass nicht das gesamte Druckluftvolumen über ein einziges Magnetventil geführt werden muss, sondern bereits ein geringer Teildruck eines über die als Steuerleitung ausgelegte Steuer-Zweigleitung 47 dem Steuerventil 40.1C zugeführten Teildruckluftvolumens ausreichend ist. Diese Auslegung ähnlich einer im Prinzip zwangsgesteuerten oder servogesteuerten Ventilanordnung ermöglicht eine Erhöhung des Betriebsdruckes auf ein vergleichbar hohes Druckniveau und gleichzeitig wird das Schalten hoher Druckluftvolumina über das Relaisventil 40.2C möglich gemacht. Das Relaisventil 40.2C kann mit vergleichsweise großer Nennweite ausgelegt werden. Darüber hinaus wird das Verhältnis der kleineren Nennweite der ersten Drossel 31 zur größeren Nennweite der zweiten Drossel 32 so gewählt, dass eine wirksame Regeneration des Lufttrockners 22 bei einer Entlüftung der Druckluftversorgungsanlage 10C möglich ist. Je größer das Verhältnis der Nennweiten ist, desto größer wird eine Druckwechselamplitude, insbesondere Drucksenkung, am Lufttrockner 22 vorteilhaft zur Regeneration zur Verfügung stehen.

Konzeptionell besteht zwischen der Druckluftversorgungsanlage 10B und 10C mit als indirekt vorgesteuerte Entlüftungsmagnetventilanordnungen die Gemeinsamkeit, dass ein Relaisventil 40.2B bzw. 40.2C einer Magnetventilanordnung 40B bzw. 40C in einer "trockenen" Leitung -also in Entlüftungsrichtung "hinter" dem Lufttrockner 22- nämlich jeweils in der zur Entlüftungsleitung 30 führenden dritten Zweigleitung 48 angeordnet ist. Damit besteht vorteilhaft eine vergleichsweise geringe Gefahr, dass ein Relaisventil 40.2B oder 40.2C aufgrund äußerer Einflüsse beschädigt wird, beispielsweise einfriert oder dergleichen. Des Weiteren benötigen beide indirekt vorgesteuerten Magnetventilanordnungen 40B, 40C einen Mindestvorsteuerdruck, um mit dem Relaiskolben des Relaisventils 40.2B, 40.2C einen notwendigen Mindestquerschnitt, nämlich mindestens den Querschnitt der Drossel 32 freigeben zu können. Zum sauberen Öffnen des Relaiskolbens wird ein Mindestvorsteuerdruck benötigt. Dieser kann im Falle der schnell entlüftenden Magnetventilanordnung 40C jedenfalls an der Drossel 31 im Falle der Regeneration beim Ablassen des Fahrzeugs dynamisch aufgebaut werden. Bei zu geringen Luftmengen bzw. Vorsteuerdrücken schaltet ein Relaiskolben nicht. Hier hat die direkt gesteuerte Magnetventilanordnung 40A Vorteile, da nur ein vergleichsweise geringer bzw. kein Vorsteuerdruck erforderlich ist.

In beiden Fällen der indirekt vorgesteuerten Magnetventilanordnungen 40B, 40C entfällt jedenfalls grundsätzlich die Notwendigkeit eines separaten Rückschlagventils 49 der Fig. 1, wie es bei einer direkt gesteuerten Magnetventilanordnung 40A, der Fig. 1 sinnvoll ist. Vielmehr kann ein federbelastetes Relaisventil 40.2B oder 40.2C zum einen eine Restdruckhaltefunktion übernehmen, wenn eine geeignete ggfs. einstellbare Ventilfeder vorgesehen wird. Außerdem ist bei einem Relaisventil 40.2B, 40.2C vorteilhaft ein Relais-Druckbegrenzer 49' des Relaisventils 40.2B, 40.2C vorgesehen, bei welchem sich unter Abgreifen des Druckes in der Zweigleitung 48 der Druck für das Relaisventil 40.2B, 40.2C beschränken lässt. Auf diese Weise kann selbst bei einem vergleichsweise hohen Betriebsdruck eine gewisse Variabilität bzw. Toleranz hinsichtlich einer Druckbegrenzung erreicht werden.

Als Unterschied der Fälle der indirekt vorgesteuerten Magnetventilanordnungen 40B, 40C ist festzustellen, dass jedenfalls grundsätzlich eine erste Drossel 31 bei der Druckluftversorgungsanlage 10C größer gewählt werden kann als eine erste Drossel 31 bei der Druckluftversorgungsanlage 10B; der Grund liegt darin, dass ein Hauptentlüftungsstrom nicht über das Steuerventil 40.1C geführt wird. Dadurch kann grundsätzlich ein schnelleres Entlüften bzw. Ablassen von Druckluft aus einem pneumatischen System 100C erfolgen als dies bei einem pneumatischen System 100B der Fall ist. Gleichwohl wird auch bei der Druckluftversorgungsanlage 10C eine gute Regeneration des Lufttrockners 22 unter Anpassung, vorzugsweise Erhöhung, der Nennweite der zweiten Drossel 32 erreicht.

In besonders vorteilhafter Weise ist ein Druckbegrenzer für alle zuvor erläuterten Magnetventilanordnungen 40A, 40B, 40C mit eine stromeinstellbaren Druckbegrenzung vorgesehen. Dazu kann bei einer stromlos offenen Magnetventilanordnung 40A, 40B, 40C der Pneumatikteil 44A, 44B, 44C einen über den Magnetteil 43A, 43B, 43C einstellbaren Öffnungsdruck aufweisen. Je nach Bedarf kann durch Einstellen eines höheren oder geringeren Stroms ein maximaler Druck auf einen höheren oder geringeren Wert begrenzt werden.

### BEZUGSZEICHENLISTE (Bestandteil der Beschreibung)

- 0: Luftzuführung
- 0.1: Filter
- 1: Druckluftzuführung
- 2: Druckluftanschluss
- 3: Entlüftungsanschluss
- 3.1: Filter
- 10, 10' 10A, 10B, 10C: Druckluftversorgungsanlage
- 20: Druckluftversorgungsleitung
- 21: Luftverdichter
- 22: Lufttrockner
- 30: Entlüftungsleitung
- 31: erste Drossel
- 32: zweite Drossel
- 40, 40', 40", 40"', 40A, 40B, 40C: Magnetventilanordnung
- 401.B, 40.1C: Steuerventil
- 40.2B, 40.2C: Relaisventil
- 43, 43A, 43B, 43C: Magnetteil
- 44, 44A, 44B, 44C: Pneumatikteil
- 47: Steuerzweigleitung
- 47.1,: erste Zweigleitung als Entlüftungsleitung
- 47.2: zweite Zweigleitung als weitere Entlüftungsleitung
- 48: dritte Zweigleitung als noch weitere Entlüftungsleitung
- 49: Rückschlagventil
- 49': Relais-Druckbegrenzer des Relaisventils 40.2B, 40.2C
- 49.1: erstes Rückschlagventil
- 49.2: zweites Rückschlagventil
- 50: Gehäuseanordnung
- 51: erster Bereich
- 52: zweiter Bereich
- 53: dritter Bereich
- 54: Verdichtungsraum
- 55: Kolben
- 56: Pleuel
- 57: Auslassventil
- 58: Trockenbehälter
- 61 B: Anker
- 61A: Ventil-Dichtelement
- 61C: Ventilsitz
- 62: Magnetkern
- 63: Spulenkörper
- 64: Ankerführungsrohr
- 65: Ventilfeder
- 66: Kanal
- 67: Freiraum
- 68: Steuerleitung
- 69: stromgesteuerter Druckbegrenzer des Pneumatikventils 44A
- 71: Dichtung
- 72: Leitung
- 73: erste Öffnung
- 74: Drossel bildende Öffnung
- 75: Anschlag
- 76: zweite Öffnung
- 90: Pneumatikanlage
- 91: Balg
- 92: Speicher
- 93: Magnetventil, Niveauregelventil für Balg
- 94: Magnetventil, Niveauregelventil für Speicher
- 95: Galerie
- 96: Ventilblock
- 100, 100A, 100B, 100C: pneumatisches System
- 400: Magnetventil
- 610: Anker
- 610A: Ventildichtelement
- 610C: Ventilsitz
- 630: Spulenkörper
- 650: Ventilfeder
- 660: Kanal
- 760: Sitzöffnung
- 740: Kanalöffnung
- A: erstes Gehäuseteil
- B: zweites Gehäuseteil
- C: drittes Gehäuseteil
- D: Dichtung
- E0: Luftzuführungs-Schnittstelle, Schnittstelle
- E1: Druckquellen-Schnittstelle, Schnittstelle
- E2: Druckluftversorgungs-Schnittstelle, Schnittstelle
- E3: Entlüftungs-Schnittstelle, Schnittstelle
- F: Feder
- G: Einbuchtung
- M: Motor
- P: Entlüftungsströmung
- *P̅*: Versorgungsströmung
- Q: Druckluftströmung
- S: Steuer-Schnittstelle, Schnittstelle
- SE: Steuerelektronik
- T, T': Deckel
- T1, T2: Deckelplatte
- W: Wandung
- X1, X1', X2: druckseitiger Ventilanschluss
- Y1', Y2: steuerseitiger Ventilanschluss
- Z1, Z1', Z2: entlüftungsseitiger Ventilanschluss

## Patentansprüche

1. Druckluftversorgungsanlage (10, 10A, 10B, 10C) zum Betreiben einer Pneumatikanlage (90), insbesondere einer Luftfederanlage eines Fahrzeugs, aufweisend:
- eine Luftzuführung (0) und einem Luftverdichter (21) zur Versorgung einer Druckluftzuführung (1) mit Druckluft,
- eine Entlüftungsleitung (30) mit einer Entlüftungsventilanordnung in Form einer steuerbaren Magnetventilanordnung (40, 40A, 40B, 40C) mit einem Magnetteil (43, 43A, 43B, 43C) und einem Pneumatikteil (44, 44A, 44B, 44C), und mit einem Entlüftungsanschluss (3) zum Ablassen von Luft, und
- eine Druckluftversorgungsleitung (20), mit einem Lufttrockner (22) und einem Druckluftanschluss (2) zur Versorgung der Pneumatikanlage (90) mit Druckluft,
wobei
- in nicht angesteuertem Zustand des Magnetteils (43, 43A, 43B, 43C) der Magnetventilanordnung (40, 40A, 40B, 40C) der Pneumatikteil (44, 44A, 44B, 44C) der Magnetventilanordnung (40, 40A, 40B, 40C) geöffnet ist, **dadurch gekennzeichnet, dass** die Magnetventilanordnung (40, 40A, 40B, 40C) einen stromeinstellbaren Druckbegrenzer (69) aufweist.

2. Druckluftversorgungsanlage (10, 10A) nach Anspruch 1, **dadurch gekennzeichnet, dass** die Magnetventilanordnung (40, 40A) zur direkten Schaltung eines Druckluftvolumens ausgelegt ist.

3. Druckluftversorgungsanlage (10, 10A) nach Anspruch 1 oder 2 **dadurch gekennzeichnet, dass** der unmittelbar über den Magnetteil (43, 43A) aktuierbare Pneumatikteil (44, 44A) in einer Entlüftungsleitung (30) der Druckluftversorgungsleitung (20) zwischen einem druckseitigen Ventilanschluss (X1) und einem entlüftungsseitigen Ventilanschluss (Z1) geöffnet ist.

4. Druckluftversorgungsanlage (10, 10A) nach einem der Ansprüche 1 bis 3, **dadurch gekennzeichnet, dass** der Pneumatikteil (44, 44A) in Form eines 2/2-Wegeventils gebildet ist.

5. Druckluftversorgungsanlage (10, 10A, 10B, 10C) nach einem der Ansprüche 1 bis 4, **gekennzeichnet durch** eine erste Drossel (31) und/oder eine zweite Drossel (32), wobei die erste Drossel (31) unmittelbar in der Druckluftversorgungsleitung (20) oder einer damit verbundenen Zweigleitung (47.2) und/oder eine zweite Drossel (32) in der Entlüftungsleitung (30) oder einer mit der Entlüftungsleitung (30) unmittelbar verbundenen Zweigleitung (48) angeordnet ist.

6. Druckluftversorgungsanlage (10B) nach Anspruch 1, **dadurch gekennzeichnet, dass** die Magnetventilanordnung (40B) zur indirekten Schaltung eines Gesamtdruckluftvolumens ein Steuerventil (40.1 B) zur Steuerung eines Relaisventils (40.2B) aufweist, das einem Gesamtdruck des Gesamtdruckluftvolumens aussetzbar ist, insbesondere in einer von der Druckluftversorgungsleitung (20) abzweigenden ersten Zweigleitung (47.1) angeordnet ist, welche neben der Entlüftungsleitung (30) und einer zweiten Zweigleitung (47.2) von der Druckluftversorgungsleitung (20) abzweigt.

7. Druckluftversorgungsanlage (10C) nach Anspruch 1 **dadurch gekennzeichnet, dass** die Magnetventilanordnung (40C) zur indirekten Schaltung eines Gesamtdruckluftvolumens ein Steuerventil (40.1C) zur Steuerung eines Relaisventils (40.2C) aufweist, das lediglich einem Teildruck des Gesamtdruckluftvolumens aussetzbar ist, insbesondere in einer von der Druckluftversorgungsleitung (20) abzweigenden, neben der Entlüftungsleitung (30), einzigen Zweigleitung (47) angeordnet ist.

8. Druckluftversorgungsanlage (10B, 10C) nach einem der Ansprüche 1 oder 5 bis 7, **dadurch gekennzeichnet, dass** in der Entlüftungsleitung (30) ein Relaisventil (40.2B, 40.2C) zum Halten eines Restdrucks angeordnet ist, insbesondere das Relaisventil (40.2B, 40.2C) zum Halten eines Restdrucks im Bereich bis 1 bar, insbesondere eines Restdrucks bis 3 bar, ausgebildet ist.

9. Druckluftversorgungsanlage (10B, 10C) nach einem der Ansprüche 1 oder 5 bis 8, **dadurch gekennzeichnet, dass** der unmittelbar über den Magnetteil (43B, 43C) aktuierbare Pneumatikteil (44B, 44C) in einer Zweigleitung, der Druckluftversorgungsleitung (20), insbesondere in einer Steuerzweigleitung (47) oder ersten Zweigleitung (47.1), zwischen einem druckseitigen Ventilanschluss (X2) und einem steuerseitigen Ventilanschluss (Y2) der Zweigleitung geöffnet ist.

10. Druckluftversorgungsanlage (10B, 10C) nach Anspruch 9 **dadurch gekennzeichnet, dass** der Pneumatikteil (44B, 44C), insbesondere in Form eines 3/2-Wegeventils, der Magnetventilanordnung (40B, 40C) in der Zweigleitung der Druckluftversorgungsleitung (20) zur pneumatischen Ansteuerung eines Relaisventils (40.2B, 40.2C) in der Entlüftungsleitung (30) geöffnet ist.

11. Druckluftversorgungsanlage (10B, 10C) nach einem der Anspruch 9 oder 10 **dadurch gekennzeichnet, dass** in nicht angesteuertem Zustand des Magnetteils (43B, 43C) des Steuerventils (40.1 B, 40.1 C) das Relaisventil (40.2B, 40.2C) in einem vorgesteuerten Zustand derart ist, dass bei anliegendem Druck das Relaisventil (40.2B, 40.2C) zwischen einem druckseitigen Ventilanschluss (X1') und einem entlüftungsseitigen Ventilanschluss (Z1') öffnet.

12. Druckluftversorgungsanlage (10B, 10C) nach einem der Ansprüche 9 bis 11, **dadurch gekennzeichnet, dass** ein Relaisventil (40.2B, 40.2C) einen Relais-Druckbegrenzer (49') aufweist.

13. Druckluftversorgungsanlage (10, 10A, 10B, 10C) nach einem der Ansprüche 1 bis 12, **dadurch gekennzeichnet, dass** der Pneumatikteil (44, 44A, 44B, 44C) einen über den Magnetteil (43, 43A, 43B, 43C) stromeinstellbaren Öffnungsdruck aufweist.

14. Pneumatisches System (100, 100A, 100B, 100C) mit der Druckluftversorgungsanlage (10, 10A, 10B, 10C) nach einem der Ansprüche 1 bis 13 und einer Pneumatikanlage (90), insbesondere einer Luftfederanlage.

15. Verfahren zum Betreiben einer Pneumatikanlage (90), insbesondere einer Luftfederanlage eines Fahrzeugs, mittels einer Druckluftversorgungsanlage (10, 10A, 10B, 10C), insbesondere nach einem der Ansprüche 1 bis 13, aufweisend die Schritte:
- Versorgen einer Druckluftzuführung (1) mit Druckluft mittels einem Luftverdichter (21) über eine Luftzuführung (0),
- Versorgen der Pneumatikanlage (90) mit Druckluft über eine Druckluftversorgungsleitung (20) mit einem Lufttrockner (22) und einem Druckluftanschluss (2),
- Ablassen von Luft über eine Entlüftungsleitung (30) zu einem Entlüftungsanschluss (3) mit einer Entlüftungsventilanordnung in Form einer steuerbaren Magnetventilanordnung (40, 40A, 40B, 40C) mit einem Magnetteil (43, 43A, 43B, 43C) und einem Pneumatikteil (44, 44A, 44B, 44C), wobei in nicht angesteuertem Zustand des Magnetteils (43, 43A, 43B, 43C) der Magnetventilanordnung (40, 40A, 40B, 40C) der Pneumatikteil (44, 44A, 44B, 44C) der Magnetventilanordnung (40, 40A, 40B, 40C) geöffnet wird oder geöffnet ist, **dadurch gekennzeichnet, dass** eine Druckbegrenzung (69) der Magnetventilanordnung (40, 40A, 40B, 40C) variabel mittels eines Steuerstroms im Magnetteil (43, 43A, 43B, 43C) der Magnetventilanordnung (40, 40A, 40B, 40C) eingestellt wird, wobei die Magnetventilanordnung (40, 40A, 40B, 40C) einen stromeinstellbaren Druckbegrenzer (69) aufweist und ein Öffnungsdruck des Pneumatikteils (44, 44A, 44B, 44C) mittels des Steuerstroms des Magnetteils (43, 43A, 43B, 43C) eingestellt wird.

16. Verfahren nach Anspruch 15 **dadurch gekennzeichnet, dass** beim Versorgen der Pneumatikanlage (90) mit Druckluft aus der Druckluftversorgungsanlage (10, 10A, 10B, 10C) oder einer Druckluftumverteilung in der Pneumatikanlage (90) der Magnetteil (43, 43A, 43B, 43C) der Magnetventilanordnung (40, 40A, 40B, 40C) derart angesteuert ist, insbesondere bestromt ist, dass der Pneumatikteil (44, 44A, 44B, 44C) der Magnetventilanordnung (40, 40A, 40B, 40C) geschlossen wird.

17. Verfahren nach Anspruch 15 oder 16 **dadurch gekennzeichnet, dass** beim Entlüften der Pneumatikanlage (90) unter Ablassen von Luft über eine Entlüftungsleitung (30) zu einem Entlüftungsanschluss (3), der Magnetteil (43, 43A, 43B, 43C) der Magnetventilanordnung (40, 40A, 40B, 40C) derart unangesteuert ist, insbesondere derart unbestromt ist, dass der Pneumatikteil (44, 44A, 44B, 44C) der Magnetventilanordnung (40, 40A, 40B, 40C) geöffnet wird.

18. Verfahren nach einem der Ansprüche 15 bis 17 **dadurch gekennzeichnet, dass** der Pneumatikteil (44, 44A) in einer Entlüftungsleitung (30) zwischen einem druckseitigen Ventilanschluss (X1) und einem entlüftungsseitigen Ventilanschluss (Z1) oder der Pneumatikteil (44B, 44C) in einer anderen Zweigleitung (47, 47.1) der Druckluftversorgungsleitung (20) zwischen einem druckseitigen Ventilanschluss (X2) und einem steuerseitigen Ventilanschluss (Y2) geöffnet oder geschlossen wird.

19. Verfahren nach einem der Ansprüche 15 bis 18 **dadurch gekennzeichnet, dass** die Druckbegrenzung der Magnetventilanordnung (40, 40A, 40B, 40C) und/oder der Öffnungsdruck des Pneumatikteils (44, 44A, 44B, 44C) stufenlos eingestellt wird.

20. Verfahren nach einem der Ansprüche 15 bis 19 **dadurch gekennzeichnet, dass** ein Schaltpunkt des Pneumatikteils (44, 44A, 44B, 44C) abhängig von der Stromstärke eines Steuerstroms im Magnetteil (43, 43A, 43B, 43C) der Magnetventilanordnung (40, 40A, 40B, 40C) variabel eingestellt wird.

## Claims

1. Compressed air supply installation (10, 10A, 10B, 10C) for operating a pneumatic installation (90), in particular an air suspension installation of a vehicle, said compressed air supply installation comprising:
- an air supply unit (0) and an air compressor (21) for supplying a compressed air supply unit (1) with compressed air,
- a bleed line (30), comprising a bleed valve arrangement in the form of a controllable solenoid valve arrangement (40, 40A, 40B, 40C) with a magnet part (43, 43A, 43B, 43C) and a pneumatic part (44, 44A, 44B, 44C), and comprising a bleed port (3) for draining air, and
- a compressed air supply line (20), comprising an air dryer (22) and a compressed air port (2) for supplying the pneumatic installation (90) with compressed air,
wherein
- the pneumatic part (44, 44A, 44B, 44C) of the solenoid valve arrangement (40, 40A, 40B, 40C) is open in the non-activated state of the magnet part (43, 43A, 43B, 43C) of the solenoid valve arrangement (40, 40A, 40B, 40C), **characterized in that** the solenoid valve arrangement (40, 40A, 40B, 40C) has a current-adjustable pressure limiter (69).

2. Compressed air supply installation (10, 10A) according to Claim 1, **characterized in that** the solenoid valve arrangement (40, 40A) is designed for direct connection of a compressed air volume.

3. Compressed air supply installation (10, 10A) according to Claim 1 or 2, **characterized in that** the pneumatic part (44, 44A) actuatable directly via the magnet part (43, 43A) is open in a bleed line (30) of the compressed air supply line (20) between a pressure-side valve port (X1) and a bleed-side valve port (Z1).

4. Compressed air supply installation (10, 10A) according to one of Claims 1 to 3, **characterized in that** the pneumatic part (44, 44A) is in the form of a 2/2 valve.

5. Compressed air supply installation (10, 10A, 10B, 10C) according to one of Claims 1 to 4, **characterized by** a first throttle (31) and/or a second throttle (32), wherein the first throttle (31) is arranged directly in the compressed air supply line (20) or a branch line (47.2) connected thereto and/or a second throttle (32) is arranged in the bleed line (30) or a branch line (48) directly connected to the bleed line (30).

6. Compressed air supply installation (10B) according to Claim 1, **characterized in that** the solenoid valve arrangement (40B), for indirect connection of an overall compressed air volume, has a control valve (40.1 B) in order to control a relay valve (40.2B), which can be exposed to an overall pressure of the overall compressed air volume, in particular is arranged in a first branch line (47.1) branching off from the compressed air supply line (20), said first branch line branching off from the compressed air supply line (20) in addition to the bleed line (30) and a second branch line (47.2).

7. Compressed air supply installation (10C) according to Claim 1, **characterized in that** the solenoid valve arrangement (40C), for indirect connection of an overall compressed air volume, has a control valve (40.1C) in order to control a relay valve (40.2C), which can be exposed merely to a partial pressure of the overall compressed air volume, in particular is arranged in a single branch line (47) branching off from the compressed air supply line (20) in addition to the bleed line (30).

8. Compressed air supply installation (10B, 10C) according to one of Claims 1 or 5 to 7, **characterized in that** a relay valve (40.2B, 40.2C) for maintaining a residual pressure is arranged in the bleed line (30), in particular the relay valve (40.2B, 40.2C) is designed to maintain a residual pressure in the range up to 1 bar, in particular a residual pressure up to 3 bar.

9. Compressed air supply installation (10B, 10C) according to one of Claims 1 or 5 to 8, **characterized in that** the pneumatic part (44B, 44C) actuatable directly via the magnet part (43B, 43C) is open in a branch line of the compressed air supply line (20), in particular in a control branch line (47) or first branch line (47.1), between a pressure-side valve port (X2) and a control-side valve port (Y2) of the branch line.

10. Compressed air supply installation (10B, 10C) according to Claim 9, **characterized in that** the pneumatic part (44B, 44C), in particular in the form of a 3/2 valve, of the solenoid valve arrangement (40B, 40C) is open in the branch line of the compressed air supply line (20) for the purpose of pneumatic activation of a relay valve (40.2B, 40.2C) in the bleed line (30).

11. Compressed air supply installation (10B, 10C) according to either of Claims 9 and 10, **characterized in that**, in the non-activated state of the magnet part (43B, 43C) of the control valve (40.1 B, 40.1 C), the relay valve (40.2B, 40.2C) is in a piloted state, in such a way that the relay valve (40.2B, 40.2C) opens between a pressure-side valve port (X1') and a bleed-side valve port (Z1') with application of pressure.

12. Compressed air supply installation (10B, 10C) according to one of Claims 9 to 11, **characterized in that** a relay valve (40.2B, 40.2C) has a relay pressure limiter (49').

13. Compressed air supply installation (10, 10A, 10B, 10C) according to one of Claims 1 to 12, **characterized in that** the pneumatic part (44, 44A, 44B, 44C) has an opening pressure that is current-adjustable via the magnet part (43, 43A, 43B, 43C).

14. Pneumatic system (100, 100A, 100B, 100C) comprising the compressed air supply installation (10, 10A, 10B, 10C) according to one of Claims 1 to 13 and a pneumatic installation (90), in particular an air suspension installation.

15. Method for operating a pneumatic installation (90), in particular an air suspension installation of a vehicle, by means of a compressed air supply installation (10, 10A, 10B, 10C), in particular according to one of Claims 1 to 13, said method comprising the following steps:
- supplying a compressed air supply unit (1) with compressed air by means of an air compressor (21) via an air supply unit (0),
- supplying the pneumatic installation (90) with compressed air via a compressed air supply line (20) comprising an air dryer (22) and a compressed air port (2),
- draining air via a bleed line (30) to a bleed port (3) comprising a bleed valve arrangement in the form of a controllable solenoid valve arrangement (40, 40A, 40B, 40C) comprising a magnet part (43, 43A, 43B, 43C) and a pneumatic part (44, 44A, 44B, 44C), the pneumatic part (44, 44A, 44B, 44C) of the solenoid valve arrangement (40, 40A, 40B, 40C) being opened or being open in the non-activated state of the magnet part (43, 43A, 43B, 43C) of the solenoid valve arrangement (40, 40A, 40B, 40C), **characterized in that** a pressure limiting means (69) of the solenoid valve arrangement (40, 40A, 40B, 40C) is variably adjusted by means of a control current in the magnet part (43, 43A, 43B, 43C) of the solenoid valve arrangement (40, 40A, 40B, 40C), wherein the solenoid valve arrangement (40, 40A, 40B, 40C) comprises a current-adjustable pressure limiter (69) and an opening pressure of the pneumatic part (44, 44A, 44B, 44C) is set by means of the control current of the magnet part (43, 43A, 43B, 43C).

16. Method according to Claim 15, **characterized in that**, when supplying the pneumatic installation (90) with compressed air from the compressed air supply installation (10, 10A, 10B, 10C) or in the event of a compressed air redistribution in the pneumatic installation (90), the magnet part (43, 43A, 43B, 43C) of the solenoid valve arrangement (40, 40A, 40B, 40C) is activated, in particular is energized, in such a way that the pneumatic part (44, 44A, 44B, 44C) of the solenoid valve arrangement (40, 40A, 40B, 40C) is closed.

17. Method according to Claim 15 or 16, **characterized in that**, when bleeding the pneumatic installation (90) with drainage of air via a bleed line (30) to a bleed port (3), the magnet part (43, 43A, 43B, 43C) of the solenoid valve arrangement (40, 40A, 40B, 40C) is unactivated, in particular is de-energized, in such a way that the pneumatic part (44, 44A, 44B, 44C) of the solenoid valve arrangement (40, 40A, 40B, 40C) is opened.

18. Method according to one of Claims 15 to 17, **characterized in that** the pneumatic part (44, 44A) is opened or closed in a bleed line (30) between a pressure-side valve port (X1) and a bleed-side valve port (Z1) or the pneumatic part (44B, 44C) in another branch line (47, 47.1) of the compressed air supply line (20) is opened or closed between a pressure-side valve port (X2) and a control-side valve port (Y2).

19. Method according to one of Claims 15 to 18, **characterized in that** the pressure limiter means of the solenoid valve arrangement (40, 40A, 40B, 40C) and/or the opening pressure of the pneumatic part (44, 44A, 44B, 44C) is adjusted continuously.

20. Method according to one of Claims 15 to 19, **characterized in that** a switching point of the pneumatic part (44, 44A, 44B, 44C) is set variably in a manner dependent on the current strength of a control current in the magnet part (43, 43A, 43B, 43C) of the solenoid valve arrangement (40, 40A, 40B, 40C).

## Revendications

1. Installation d'alimentation en air comprimé (10, 10A, 10B, 10C) pour faire fonctionner une installation pneumatique (90), en particulier une installation de suspension pneumatique d'un véhicule, comprenant:
- une alimentation en air (0) et un compresseur d'air (21) pour l'alimentation en air comprimé d'une arrivée d'air comprimé (1),
- une conduite d'évacuation d'air (30) comprenant un ensemble de soupape d'évacuation d'air sous la forme d'un ensemble d'électrovanne commandable (40, 40A, 40B, 40C) présentant une partie magnétique (43, 43A, 43B, 43C) et une partie pneumatique (44, 44A, 44B, 44C), et comprenant un raccord d'évacuation d'air (3) pour l'évacuation d'air, et
- une conduite d'alimentation en air comprimé (20), comprenant un dessiccateur d'air (22) et un raccord d'air comprimé (2) pour l'alimentation en air comprimé de l'installation pneumatique (90),
- la partie pneumatique (44, 44A, 44B, 44C) de l'ensemble d'électrovanne (40, 40A, 40B, 40C) étant ouverte dans l'état non commandé de la partie magnétique (43, 43A, 43B, 43C) de l'ensemble d'électrovanne (40, 40A, 40B, 40C), **caractérisée en ce que**
l'ensemble d'électrovanne (40, 40A, 40B, 40C) comprend un limiteur de pression (69) réglable par un courant.

2. Installation d'alimentation en air comprimé (10, 10A) selon la revendication 1, **caractérisée en ce que** l'ensemble d'électrovanne (40, 40A) est adapté pour la connexion directe d'un volume d'air comprimé.

3. Installation d'alimentation en air comprimé (10, 10A) selon la revendication 1 ou 2, **caractérisée en ce que** la partie pneumatique (44, 44A) pouvant être activée directement par le biais de la partie magnétique (43, 43A) est ouverte dans une conduite d'évacuation d'air (30) de la conduite d'alimentation en air comprimé (20) entre un raccord de soupape côté pression (X1) et un raccord de soupape côté évacuation d'air (Z1).

4. Installation d'alimentation en air comprimé (10, 10A) selon l'une quelconque des revendications 1 à 3, **caractérisée en ce que** la partie pneumatique (44, 44A) est formée sous la forme d'une soupape à 2/2 voies.

5. Installation d'alimentation en air comprimé (10, 10A, 10B, 10C) selon l'une quelconque des revendications 1 à 4, **caractérisée par** un premier étranglement (31) et/ou un deuxième étranglement (32), le premier étranglement (31) étant disposé directement dans la conduite d'alimentation en air comprimé (20) ou dans une conduite de dérivation (47.2) reliée à celle-ci et/ou un deuxième étranglement (32) étant disposé dans la conduite d'évacuation d'air (30) ou dans une conduite de dérivation (48) reliée directement à la conduite d'évacuation d'air (30).

6. Installation d'alimentation en air comprimé (10B) selon la revendication 1, **caractérisée en ce que** l'ensemble d'électrovanne (40B) comprend, pour la connexion indirecte d'un volume total d'air comprimé, une soupape de commande (40.1B) pour la commande d'une soupape-relais (40.2B), laquelle peut être exposée à une pression totale du volume total d'air comprimé, et est en particulier disposé dans une première conduite de dérivation (47.1) bifurquant de la conduite d'alimentation en air comprimé (20), laquelle bifurque de la conduite d'alimentation en air comprimé (20) près de la conduite d'évacuation d'air (30) et d'une deuxième conduite de dérivation (47.2).

7. Installation d'alimentation en air comprimé (10C) selon la revendication 1, **caractérisée en ce que** l'ensemble d'électrovanne (40C) comprend, pour la connexion indirecte d'un volume total d'air comprimé, une soupape de commande (40.1C) pour la commande d'une soupape-relais (40.2C), laquelle peut être exposée seulement à une pression partielle du volume total d'air comprimé, et est en particulier disposé dans une conduite de dérivation unique (47) bifurquant de la conduite d'alimentation en air comprimé (20), près de la conduite d'évacuation d'air (30).

8. Installation d'alimentation en air comprimé (10B, 10C) selon l'une quelconque des revendications 1 ou 5 à 7, **caractérisée en ce qu'**une soupape-relais (40.2B, 40.2C) pour maintenir une pression résiduelle est disposée dans la conduite d'évacuation d'air (30), en particulier la soupape-relais (40.2B, 40.2C) est réalisée pour maintenir une pression résiduelle dans la région de 1 bar, en particulier une pression résiduelle de jusqu'à 3 bar.

9. Installation d'alimentation en air comprimé (10B, 10C) selon l'une quelconque des revendications 1 ou 5 à 8, **caractérisée en ce que** la partie pneumatique (44B, 44C) pouvant être activée directement par le biais de la partie magnétique (43B, 43C) est ouverte dans une conduite de dérivation de la conduite d'alimentation en air comprimé (20), en particulier dans une conduite de dérivation de commande (47) ou une première conduite de dérivation (47.1), entre un raccord de soupape côté pression (X2) et un raccord de soupape côté commande (Y2) de la conduite de dérivation.

10. Installation d'alimentation en air comprimé (10B, 10C) selon la revendication 9, **caractérisée en ce que** la partie pneumatique (44B, 44C), en particulier sous la forme d'une soupape à 3/2 voies, de l'ensemble d'électrovanne (40B, 40C) est ouverte dans la conduite de dérivation de la conduite d'alimentation en air comprimé (20) pour la commande pneumatique d'une soupape-relais (40.2B, 40.2C) dans la conduite d'évacuation d'air (30).

11. Installation d'alimentation en air comprimé (10B, 10C) selon l'une quelconque des revendications 9 ou 10, **caractérisée en ce que**, dans l'état non commandé de la partie magnétique (43B, 43C) de la soupape de commande (40.1B, 40.1C), la soupape-relais (40.2B, 40.2C) est dans un état piloté, de telle sorte qu'en cas d'application de pression, la soupape-relais (40.2B, 40.2C) s'ouvre entre un raccord de soupape côté pression (X1') et un raccord de soupape côté commande (Z1').

12. Installation d'alimentation en air comprimé (10B, 10C) selon l'une quelconque des revendications 9 à 11, **caractérisée en ce qu'**une soupape-relais (40.2B, 40.2C) comprend un limiteur de pression de relais (49').

13. Installation d'alimentation en air comprimé (10, 10A, 10B, 10C) selon l'une quelconque des revendications 1 à 12, **caractérisée en ce que** la partie pneumatique (44, 44A, 44B, 44C) présente une pression d'ouverture réglable par un courant par le biais de la partie magnétique (43, 43A, 43B, 43C).

14. Système pneumatique (100, 100A, 100B, 100C) comprenant l'installation d'alimentation en air comprimé (10, 10A, 10B, 10C) selon l'une quelconque des revendications 1 à 13 et une installation pneumatique (90), en particulier une installation de suspension pneumatique.

15. Procédé pour faire fonctionner une installation pneumatique (90), en particulier une installation de suspension pneumatique d'unvéhicule, au moyen d'une installation d'alimentation en air comprimé (10, 10A, 10B, 10C), en particulier selon l'une quelconque des revendications 1 à 13, comprenant les étapes suivantes :
- alimentation en air comprimé d'une arrivée d'air comprimé (1) au moyen d'un compresseur d'air (21) par le biais d'une alimentation en air (0),
- alimentation en air comprimé de l'installation pneumatique (90) par le biais d'une conduite d'alimentation en air comprimé (20) comprenant un dessiccateur d'air (22) et un raccord d'air comprimé (2),
- évacuation d'air par le biais d'une conduite d'évacuation d'air (30) jusqu'à un raccord d'évacuation d'air (3) comprenant un ensemble de soupape d'évacuation d'air sous la forme d'un ensemble d'électrovanne commandable (40, 40A, 40B, 40C) comprenant une partie magnétique (43, 43A, 43B, 43C) et une partie pneumatique (44, 44A, 44B, 44C),
la partie pneumatique (44, 44A, 44B, 44C) de l'ensemble d'électrovanne (40, 40A, 40B, 40C) étant ouverte ou se trouvant ouverte dans l'état non commandé de la partie magnétique (43, 43A, 43B, 43C) de l'ensemble d'électrovanne (40, 40A, 40B, 40C), **caractérisé en ce qu'**un limiteur de pression (69) de l'ensemble d'électrovanne (40, 40A, 40B, 40C) est réglé de façon variable par le biais d'un courant de commande dans la partie magnétique (43, 43A, 43B, 43C) de l'ensemble d'électrovanne (40, 40A, 40B, 40C), l'ensemble d'électrovanne (40, 40A, 40B, 40C) comprenant un limiteur de pression (69) réglable par un courant et une pression d'ouverture de la partie pneumatique (44, 44A, 44B, 44C) étant ajustée au moyen du courant de commande de la partie magnétique (43, 43A, 43B, 43C).

16. Procédé selon la revendication 15, **caractérisé en ce qu'**en cas d'alimentation de l'installation pneumatique (90) en air comprimé provenant de l'installation d'alimentation en air comprimé (10, 10A, 10B, 10C) ou en cas de redistribution d'air comprimé dans l'installation pneumatique (90), la partie magnétique (43, 43A, 43B, 43C) de l'ensemble d'électrovanne (40, 40A, 40B, 40C) est commandée, en particulier alimentée en courant électrique, de telle sorte que la partie pneumatique (44, 44A, 44B, 44C) de l'ensemble d'électrovanne (40, 40A, 40B, 40C) soit fermée.

17. Procédé selon la revendication 15 ou 16, **caractérisé en ce qu'**en cas d'évacuation d'airde l'installation pneumatique (90) en évacuant de l'air par le biais d'une conduite d'évaluation d'air (30) jusqu'à un raccord d'évacuation d'air (3), la partie magnétique (43, 43A, 43B, 43C) de l'ensemble d'électrovanne (40, 40A, 40B, 40C) est non commandée, en particulier non alimentée en courant électrique, de telle sorte que la partie pneumatique (44, 44A, 44B, 44C) de l'ensemble d'électrovanne (40, 40A, 40B, 40C) soit ouverte.

18. Procédé selon l'une quelconque des revendications 15 à 17, **caractérisé en ce que** la partie pneumatique (44, 44A) est ouverte ou fermée dans une conduite d'évacuation d'air (30) entre un raccord de soupape côté pression (X1) et un raccord de soupape côté évacuation d'air (Z1) ou la partie pneumatique (44B, 44C) est ouverte ou fermée dans une autre conduite de dérivation (47, 47.1) de la conduite d'alimentation en air comprimé (20) entre un raccord de soupape côté pression (X2) et un raccord de soupape côté commande (Y2).

19. Procédé selon l'une quelconque des revendications 15 à 18, **caractérisé en ce que** la limitation de pression de l'ensemble d'électrovanne (40, 40A, 40B, 40C) et/ou la pression d'ouverture de la partie pneumatique (44, 44A, 44B, 44C) sont ajustées en continu.

20. Procédé selon l'une quelconque des revendications 15 à 19, **caractérisé en ce qu'**un point de branchement de la partie pneumatique (44, 44A, 44B, 44C) est ajusté de manière variable en fonction de l'intensité du courant d'un courant de commande dans la partie magnétique (43, 43A, 43B, 43C) de l'ensemble d'électrovanne (40, 40A, 40B, 40C).
